# EUROPÄISCHE PATENTSCHRIFT

(11) **EP 2 249 956 B1**
(45) Veröffentlichungstag und Bekanntmachung des Hinweises auf die Patenterteilung: **03.07.2013**
(21) Anmeldenummer: 08850098.8
(22) Anmeldetag: 12.11.2008
(51) Int. Cl.: B01J 8/00, B01J 8/12

(54) **FLUIDBEHANDLUNGSANLAGE MIT PARALLEL BETRIEBENEN SCHÜTTGUTBETTEN**
FLUID TREATMENT SYSTEM WITH BULK MATERIAL BEDS OPERATED IN PARALLEL
DISPOSITIF DE TRAITEMENT DE FLUIDE COMPORTANT DES LITS DE MATIÈRES EN VRAC EXPLOITÉS EN PARALLÈLE

(30) Priorität: 12.11.2007 DE 102007054212; 15.05.2008 WO PCT/EP2008/003910
(43) Veröffentlichungstag der Anmeldung: 17.11.2010
(73) Patentinhaber: Grochowski, Horst, 46149 Oberhausen (DE)
(72) Erfinder: Grochowski, Horst, 46149 Oberhausen (DE)
(74) Vertreter: GROSSE SCHUMACHER KNAUER VON HIRSCHHAUSEN
(86) Internationale Anmeldenummer: PCT/EP2008/009557
(87) Internationale Veröffentlichungsnummer: WO 2009/062695

(56) Entgegenhaltungen:
- EP-A- 1 529 561
- DE-A1- 3 916 325
- US-A- 2 423 411
- US-A- 2 491 446

## Beschreibung

### GEBIET DER ERFINDUNG

Die Erfindung betrifft eine Fluidbehandlungsanlage mit parallel betriebenen Schüttgutbetten gemäß dem Oberbegriff des Anspruchs 1. Demnach wird bei den parallel nebeneinander angeordneten Schüttgutbetten jedes Schüttgutbett von dem zu behandelnden Fluid im Wesentlichen von unten nach oben durchströmt, während das Schüttgut im Gegenstrom zum Fluid im Wesentlichen von oben nach unten das Schüttgutbett durchwandert. Hierzu werden am unteren Ende des Schüttgutbettes Schüttgutteilmengen abgezogen und am oberen Ende des Schüttgutbettes entsprechend große Schüttgutteilmengen dem Schüttgutbett aufgegeben. Insbesondere bezieht sich die Erfindung auf solche gattungsgemäße Fluidbehandlungsanlagen, bei denen die Schüttgutbetten durch einen gemeinsamen horizontalen Chargierkanal derart miteinander verbunden sind, dass zumindest ein Chargierwagen durch den Chargierkanal zwischen einer Chargierposition und mehreren Schüttgutteilaufgabepositionen oberhalb der Schüttgutbetten verfahrbar ist. Zusätzlich oder alternativ zu einem Chargierkanal kann vorgesehen sein, dass die Schüttgutbetten durch einen gemeinsamen horizontalen Schüttgutaustragskanal miteinander verbunden sind, wobei das Schüttgut mittels eines Fahrantriebes über den Austragskanal aus der Fluidbehandlunasanlage abziehbar ist.

### TECHNOLOGISCHER HINTERGRUND

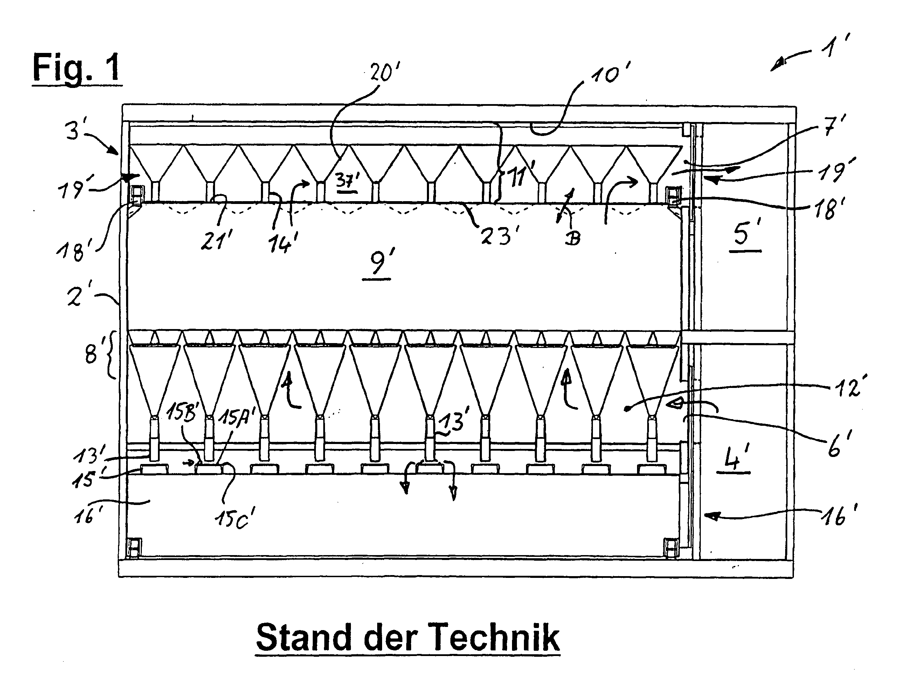

Fluidbehandlungsanlagen der eingangs genannten Art sind aus der WO 2001/017663 des Anmelders bekannt. Wie aus der diesen Stand der Technik repräsentierenden Figur 1 ersichtlich, umfasst die bekannte Fluidbehandlungsanlage 1' einen Rohrkanal 2', der in Figur 1 quer zu seiner Längsachse geschnitten dargestellt ist und aus einer Vielzahl von innerhalb des Rohrkanals 2' hintereinander angeordneten Wanderbettreaktormodulen 3' besteht. Parallel zu einer Seitenwand des Rohrkanals 2' verläuft ein unten liegender Zuströmkanal 4' für nicht behandeltes Fluid und ein darüber liegender Abströmkanal 5' für behandeltes Fluid. Das zu behandelnde Fluid strömt über seitlich angeordnete, ggf. verschließbare, Anströmfenster 6' in einen Gasverteilraum 12' unterhalb eines Anströmbodens 8' in jedes Reaktormodul ein. Über den aus der EP 0357653 B1 bekannten Anströmboden 8' gelangt das zu behandelnde Fluid in ein horizontal erstrecktes Schüttgutbett 9' etwa gleichmäßiger Höhe, welches aus z.B. adsorptiv- oder absorptiv bzw. katalytisch wirksamen Schüttgutpartikel besteht. Oberhalb des Schüttgutbettes 9' befindet sich unter der Rohrkanaldecke 10' ein durchgehender Chargierkanal 11', in dem sich das behandelte Fluid sammeln kann, bevor es über seitliche, ggf. verschließbare Abströmfenster 7' das Wanderbettreaktormodul 3' verlassen und durch den Abströmkanal 5' aus der Fluidbehandlungsanlage 1' abgeführt werden kann.

Um das Schüttgut des Schüttgutbettes 9' allmählich auszutauschen, wird von Zeit zu Zeit am unteren Ende verbrauchtes Schüttgut abgezogen und am oberen Ende frisches Schüttgut wieder aufgegeben, so dass die Betthöhe konstant bleibt. Der schrittweise Schüttgutabzug erfolgt in bekannter Weise über den Anströmboden 8' dessen Schüttgutaustrittsrohre 13' über eine an sich bekannte Schüttgutaustragsvorrichtung 15' freigegeben und wieder geschlossen werden können. Hierzu ist oberhalb einer horizontalen Stauplatte 15A' mindestens je ein Austragsfinger 15B' horizontal durch den Abstandsspalt zwischen der Stauplatte 15A' und dem zugehörigen Schüttgutaustragsrohr 13' bis zu den Seitenkanten 15C' der Stauplatte 15A' bewegbar. Dadurch wird Schüttgut von der Stauplatte abgeworfen und von oben rutscht entsprechend viel Schüttgut aus jedem Schüttgutaustragsrohr 13' nach. Ausgetragenes Schüttgut kann über einen Schüttgutaustragswagen 16' oder ein entlang des Rohrkanals 2' verlaufendes Förderband ausgetragen werden.

Um beim Schüttgutaustrag gleichzeitig eine gleichgroße Menge frischen Schüttgutes zur Aufrechterhaltung der Betthöhe nachführen zu können, ist ein mittels eines Fahrwerks 18' entlang des Rohrkanals 2' innerhalb desselben verfahrbarer Chargierwagen 19' vorgesehen. In der Figur 1 befindet sich der Chargierwagen 19' gerade über dem dargestellten Wanderbettreaktormodul. Der Chargierwagen 19' ist wannenförmig ausgebildet und mit einer Vielzahl von rasterförmig angeordneten Auslauftrichtern 20' versehen, die in Schüttgutauslassrohre 14' an ihrem unteren Ende übergehen. Unterhalb der unteren Mündungen 21' der Schüttgutauslassrohre 14' befindet sich ein horizontal erstrecktes Staubblech, das als Schüttgut-Absperrorgan 23' dient und zu diesem Zweck in den jeweiligen Positionen der Mündungsenden der Schüttgutauslassrohre lochartig durchbrochen ist. Das Staubblech ist horizontal um etwa eine Durchbrechungsbreite verschiebbar, so dass es in seiner zweiten Schiebeposition die Mündungsenden der Schüttgutauslassrohre14' verschließt. Auf diese Weise ist es möglich, den Chargierwagen 19' über jedes der in dem Rohrkanal 2' hintereinander liegenden Wanderbettreaktormodule 3' zu verfahren, um dort einen Schüttgutteilaustausch vorzunehmen. Wenn der Chargierwagen 19' nun entlang des Chargierkanals11' verfahren wird, unterbricht das Staubblech die Fluidabströmung am oberen Ende des Schüttgutbettes 9', über das der Chargierwagen 19' gerade hinweg fährt, und das Staubblech schleift über die Spitzen der Schüttgutkegel, die sich durch den Nachfüllvorgang an der oberen Begrenzung des Schüttgutbettes 9' ausbilden.

Die Gleichmäßigkeit, mit der das Schüttgut die Schüttgutbetten durchwandert, ist für die technische Wirkung und für die Wirtschaftlichkeit eines solchen Gegenstrom-Fluidbehandlungsverfahrens von großer Bedeutung. Deshalb werden besondere Austragsvorrichtungen 15' unterhalb jedes Schüttgutbettes verwendet, die aus jedem der zumeist zahlreichen Schüttgutabzugsrohre taktweise bei jedem Arbeitshub praktisch die gleiche Schüttgutmenge je Auslass abzieht. Die hierzu mit großem Erfolg verwendeten Schüttgutaustragsvorrichtungen sind aus der EP 0 357 653 B1 bekannt. Bei dieser bekannten Schüttgutaustragseinrichtung ist unterhalb einer Reihe von nebeneinander angeordneten Mündungsöffnungen der Schüttgutabzugsrohre eine streifenförmige, durchgängige und konstant breite Staufläche in Gestalt des Querschenkels eines U- oder T-Trägers angeordnet. Ein parallel zu der Rohrreihe und dementsprechend auch parallel zu der länglichen Staufläche angeordneter fingerartiger Stab 15B' passt mit Untermaß zwischen die Staufläche und die Rohrmündungen und ist von seinen Stimenden her durch einen Antrieb zwischen den Seitenkanten 15C' der Staufläche quer zu deren Längserstreckung taktweise reversierend bewegbar. Bei jeder dieser Bewegungen wird auf der Staufläche unter der Rohrmündung aufgestautes Schüttgut über den Seitenrand der Staufläche in ein darunter befindliches Auffangbehältnis geworfen. Letzteres kann eine Trichteranordnung getrennt für jedes Wanderbettreaktormodul 9', ein Schüttgutaustragswagen 16', der in einem Schüttgutaustragskanal unter einer Mehrzahl von Schüttgutreaktormodulen hindurch fährt, oder auch ein Förderband sein. Die Dauerfunktionstüchtigkeit dieser Austragsvorrichtungen ist seit über 20 Jahren ein Garant für störungsfreies Funktionieren gattungsgemäßer Fluidbehandlungsanlagen. Aus Gründen der Werkstoffeigenschaften sind derartige Austragsvorrichtungen längenbegrenzt, so dass in der Regel für jedes Schüttgutbett (Wanderbettreaktormodul) eine eigenständig angetriebene Austragsvorrichtung Anwendung findet.

### DARSTELLUNG DER ERFINDUNG

Der Erfindung liegt die Aufgabe zugrunde, die bekannten Fluidbehandlungsanlagen dahingehend weiter zu entwickeln, dass die prozesstechnische Variabilität einer gattungsgemäßen Fluidbehandlungsanlage im Vergleich zu dem aufgezeigten Stand der Technik verbessert wird, ohne die Vorteile eines verfahrbaren Chargierwagens einzubüßen. Zur Lösung dieser Aufgabe wird eine Fluidbehandlungsanlage mit den Merkmalen des Anspruchs 1 vorgeschlagen. Demzufolge sind unterhalb der Schüttgutauslässe und des Schüttgut-Absperrorgans des Chargierwagens Schüttgutdurchleitrohre vorgesehen, deren Schüttgutauslassmündungen auf längenveränderbare Schüttgutkegeln eines darunter liegenden Schüttgutbettes enden. Dadurch wird ein Schüttgutauslass deutlich unterhalb des Schüttgut-Absperrorgans möglich und der Fluidaustritt aus dem Schüttgutbett unterhalb des Chargierwagens wird nicht mehr unterbrochen. Dabei bedeutet "Unterhalb" im Sinne der Erfindung nicht nur vertikal unterhalb sondern auch seitlich versetzt unterhalb der Schuttgutauslässe des Chargierwagens.

Durch die Erfindung werden eine Reihe erheblicher Vorteile erzielt. Insbesondere wird nunmehr oberhalb des Schüttgutbettes ein Gassammelraum vorgebbaren Volumens gebildet, so dass ein von Druckschwankungen im Wesentlichen freier Fluidabzug oberhalb des Schüttgutbettes auch in solchen Betriebsphasen möglich ist, in denen sich der Chargierwagen in Bewegung von einem zum nächsten Wanderbettreaktormodul befindet, an dem ein Schüttgutteilaustausch vorgenommen werden soll. Mithin steht - bei offen stehendem Zu- und Abströmfenster der Schüttgutbetten - ständig die maximale Fluidbehandlungsrate zur Verfügung, und zwar auch dann wenn sich der Chargierwagen im Fahrbetrieb befindet. Die Fluidströmung wird dadurch vergleichsmäßigt. Ferner wird das Schüttgut vor Beschädigungen durch das Schüttgut-Absperrorgan besser geschützt. Eine größtmögliche Schüttgutschonung ist vor allem dann von Bedeutung, wenn Schüttgutpartikel etwa einheitlicher Größe zur Anwendung kommen sollen. Das Risiko der Unterkornerzeugung durch mechanische Beschädigungen der Schüttgutkörner wird also verringert.

Die Schüttgutdurchleitrohre, bzw. innerhalb unterer Teleskopdurchleitrohre verlaufende obere Teleskopdurchleitrohre, sind vorteilhafterweise durch ein gemeinsames erstes Tragelement miteinander verbunden. Dieses Tragelement kann auch als Staubblech ausgebildet sein und trichterförmige Durchlässe aufweisen, an deren unteren Enden sich die Schüttdurchleitrohre anschließen. Die Schüttgutdurchleitrohre oder deren ggf. trichterförmig querschnittsvergrößerte Einlässe werden zur Verminderung des Risikos von Schüttgutansammlungen auf dem Staubblech mit diesen verschweißt.

Um die Fluidbehandlungsanlage an sich ggf. verändernde Fluidbehandlungsbedingungen anzupassen, können die Schüttgutdurchleitrohre längenveränderbar sein. Dies hat zur Folge, dass die sich einstellende Höhe des Schüttgutbettes an verfahrentechnische Gegebenheiten anpassbar ist. Diese Lösung ist von eigenständig erfinderischer Bedeutung und kann auf verschiedene Weise ausgeführt werden. Gemäß einer besonders bevorzugten Ausführungsform, sind teleskopierbare Rohrabschnitte vorgesehen, die wie besonders bevorzugt, durch ein zweites Tragelement in ihren jeweiligen Relativpositionen miteinander verbunden und durch eine Hubeinrichtung gemeinsam angehoben oder abgesenkt werden. Ein derartiges Tragelement ist vorzugsweise rahmenförmig gestaltet und verbessert die Stabilisierung der Schüttgutdurchleitrohre. Es können auch mehrere zweite Tragelemente in verschiedenen Höhen an den Teleskoprohren vorgesehen sein. Mit einer derartigen Anordnung können bei gleich bleibend regelmäßiger Oberflächenstruktur des Schüttgutbettes Betthöhenunterschiede von bis zu etwa 2m vorzugsweise bis zu etwa 1m Höhenunterschied realisiert werden. Sich ändernden Behandlungsanforderungen an die Fluidbehandlungsanlage kann also auf einfache Weise entsprochen werden.

Es ist sowohl möglich, die Schüttgutdurchleitrohre am Chargierwagen anzuordnen und mit ihm mit zu bewegen, als auch die Schüttgutdurchleitrohre als nicht beweglichen Bestandteil jedes Schüttgutbettes oberhalb desselben fest einzubauen. Im letzteren Fall kann zwischen dem Schüttgutabsperrorgan des Chargierwagens und den Schüttgutdurchleitrohren, die dann Bestandteil eines Zwischenbodens sind, ein Zwischenraum frei wählbarer Höhe vorgesehen sein, der als Zwischen-Bunker für Schüttgut dient.

Wenn nun unterhalb des Chargierwagens ein solcher einen Schüttgutdurchtritt gestattender fester Zwischenboden vorgesehen ist, der den von dem Chargierwagen benutzten Chargierkanal von den Gasabströmraum des darunter gelegenen Schüttgutbettes abtrennt, kann der Chargierwagen im Bedarfsfalle auch dann gewartet oder repariert werden, wenn die Fluidbehandlungsanlage nicht vollständig außer Betrieb gesetzt wird. Insbesondere hält der Zwischenboden den Chargierwagen von dem, die Fluidbehandlungsanlage durchziehenden Fluidstrom fern. Ein von der übrigen Fluidbehandlungsanlage im Wesentlichen unabhängiges Durchspülen mit einem Schutzgas oder Kühlen mit einem Kühlgas ist möglich. Eine derartige Fluidbehandlungsanlage ist auch unabhängig von dem besonderen Merkmal des Anspruchs 1 und eigenständig erfinderischer Bedeutung. Bei einer besonders bevorzugten Ausführungsform der Erfindung kann der Zwischenboden also einen von dem Chargierwagen beschickten Zwischenbunker definieren, welcher den Zwischenboden als Bunkerboden und den Chargierwagen als Befüllorgan nutzt.

Wenn die Fluidbehandlungsanlage für einen parallelen Betrieb dienende übereinander angeordnete Schüttgutbetten aufweist und zur Beschickung der unterhalb des obersten Bettes gelegenen unteren Betten Chargierrohre vorgesehen sind, die mindestens einen oberhalb des obersten Schüttgutbettes gelegenen Schüttgutvorratsbunker mit dem/den unteren Bett/en verbinden und mit Schüttgut versorgen, ist ein Chargierwagen oberhalb des obersten Bettes vorgesehen und versorgt von dort aus sowohl das oberste als auch das/die untere/n Bett/en mit Schüttgut. Dadurch wird eine schonende Chargierung mit Schüttgut möglich, ohne dass jede Reihe von Schüttgutbetten mit eigenständigen Chargierwagen versehen werden muss. Eine derart ausgestattete Fluidbehandlungsanlage ist auch unabhängig von den besonderen Merkmalen des Anspruchs 1 von eigenständig erfinderischer Bedeutung.

Um in diesen, aber auch in anderen Fällen von mehrstöckigen Fluidbehandlungsanlagen das Schüttgut beim Abziehen bzw. beim Teilabziehen von Schüttgut aus einem höhergelegenen Bett durch Fallrohre, die durch tiefergelegene Betten geführt werden, besser gegen Bruchbelastungen zu schützen, sind diese Fallrohre, ggf. nach vorheriger Zusammenfassung mehrerer solcher Fallrohre, mit einer Schüttgutaustragsvorrichtung an Ihrem unteren Endbereich versehen, der so betätigt wird, dass das Fallrohr bei einem Schüttgutabzug oder einem Schüttgutteilabzug stets bis zu einem gegebenen Höhenniveau mit Schüttgut gefüllt bleibt. Eine derart ausgestattete Fluidbehandlungsanlage ist auch unabhängig von den besonderen Merkmalen des Anspruchs 1 von eigenständig erfinderischer Bedeutung.

Wenn bei stockförmig angeordneten parallel betriebenen Schüttgutbetten der Chargierwagen Schüttgutbunkerbereiche mit mindestens je einem Auslass für das oberste Bett und mindestens je einen Auslass für tiefergelegene Betten aufweist, können mit einem einzigen Chargierwagen Schüttgutbetten auf verschiedenen Höhenniveaus mit Schüttgut versorgt werden. Dies kann auch für jede Schüttgutebene unabhängig von anderen Schüttgutebenen erfolgen. Hierzu können die Schüttgutauslässe des Chargierwagens für die verschiedenen Schüttgutebenen gewünschtenfalls getrennt voneinander geöffnet und geschlossen werden.

Um die nutzbare Höhe von Schüttgutbetten der Fluidbehandlungsanlage zu vergrößern, kann es, insbesondere in einem Schüttgutvorratsbunker, vorgesehen sein, ein gerade gestrecktes oder ebenflächig geformtes Planierelement in horizontal bewegbarer Weise im oberen Bereich des Schüttgutbettes anzuordnen. Horizontale, insbesondere zyklische Bewegungen eines derartigen Planierelementes verteilen hochliegende Schüttgutanhäufungen auf weniger hochgelegene Schüttgut-Oberflächenzonen. Ein deratiges Planierelement kann unter Anderem rechenartig oder gitterartig aufgebaut sein und ist bei Fluidbehandlungsanlagen mit eigenständiger erfinderischer Bedeutung einsetzbar, die die besonderen Merkmale des Anspruchs 1 nicht aufweisen.

Das der Erfindung weiterhin zugrunde liegende Problem, den das Schüttgut schonenden Austrag von Schüttgutteilmengen aus Gegenstrom-Fluidbehandlungsanlagen weiter zu verbessern und bei Großanlagen den Betrieb zu vereinfachen wird gelöst mit den Merkmalen des Anspruchs 14. Demnach ist vorgesehen, dass bei einer gattungsgemäßen Fluidbehandlungsanlage eine Schüttgutaustragseinrichtung mindestens ein Stauflächen aufweisendes, rinnenförmiges Stauelement aufweist. Das Stauelement ist unterhalb von in einer Reihe nebeneinander angeordneten Mündungsöffnungen der Schüttgutteilabzugsrohre derart angeordnet, dass es das aus diesen austretende Schüttgut aufstaut. Die Stauflächen innerhalb der erfindungsgemäßen Rinne sind im Abstand der Mündungsöffnungen der Schüttgutteilabzugsrohre (Mündungsöffnungen) angeordnet, wobei zwischen diesen mit Abstand voneinander angeordneten Stauflächen Öffnungen in der Rinne, insbesondere in Gestalt von Bodenöffnungen, vorgesehen sind, durch die aufgestautes Schüttgut aus dem rinnenförmigen Stauelement austreten kann. Das Austreten des Schüttgutes durch die voneinander beabstandeten Öffnungen in der Rinne wird durch einen Schüttgutschieber bewirkt. Mindestens ein Schüttgutschieber wird von jeder Staurinne aufgenommen. Damit kein Schüttgutpartikel längere Zeit in der Staurinne liegen bleiben kann, ist der Schüttgutschieber der Rinnenform angepasst. Vorzugsweise berührt der Schüttgutschieber mittels einer geeignet ausgestalteten Kante alle schüttgutbeaufschlagten Flächenbereiche des rinnenförmigen Stauelementes. Ferner ist für einen Schüttgutteilmengenaustrag ein den Schüttgutschieber der Längserstreckungsrichtung der Rinne nach verschiebender Antrieb derart vorgesehen, dass der Schüttgutschieber aufgestautes Schüttgut durch mindestens eine der Öffnungen aus der Staurinne abwirft. Eine derartige Lösung ist von eigenständig erfinderischer Bedeutung.

Das neuartig ausgestaltete Stauelement, der neuartig ausgestaltete Schüttgutschieber und dessen Antrieb ermöglichen eine völlig neue und vereinfachende Betriebsweise. So werden die nur relativ kurzen reversierenden Arbeitsschübe des Schüttgutaustragsfingers nach dem Stand der Technik von größenordnungsmäßig 30 cm Länge ersetzt durch vergleichsweise langhubige, insbesondere extrem langhubige Bewegungen. Auch entfallen die großen Längen des Austragsfingers nach dem Stand der Technik und die damit einhergehenden Risiken der thermischen Verspannung und dergleichen, denn die erfindungsgemäßen Austragsschieber haben funktionsbedingt eine Länge von maximal der inneren Breite der Staurinne.

Es ist nun auf verschiedenste Weise möglich, die Austragsvorrichtung nach der Erfindung im Einzelnen auszugestalten:

Wenn das rinnenförmige Stauelement in einem Schüttgutaustragskanal angeordnet wird, der sich über die Länge von mehr als einem Wanderbettreaktormodul erstreckt, so wird es möglich, den mindestens einen Schüttgutschieber entlang dieser Staurinne über die Breite einer Vielzahl von Wanderbettreaktormodulen fortschreitend zu bewegen und erst zu reversieren, wenn der Schüttgutschieber am anderen Ende eines Austragskanals angekommen ist. Auf diese Weise kann ein Schüttgutschieber nacheinander eine Vielzahl von aufgestauten Schüttgutteilmengen über das in Schieberbewegungsrichtung jeweils benachbarte Bodenloch der Staurinne austragen, denn der Schieber trifft nach Überschreiten eines solchen Bodenloches auf die nächste Staufläche und räumt das dort liegende Schüttgut zum nächsten Bodenloch, wo es austritt - und so fort. Sofern vorangehend oder nachfolgend von "Bodenloch" oder "Bodenöffnung" oder "Öffnung" die Rede ist, ist hiermit im Sinne der Erfindung jede Art von Durchbrechung der Wand des rinnenförmigen Stauelementes zu verstehen, durch die das entlang der Rinne geschobene Schüttgut aus dieser austreten kann, ohne über eine der seitlichen Rinnenoberkanten in unkontrollierter Menge abgeworfen zu werden.

Wenn in einem rinnenförmigen Stauelement mehrere Schüttgutschieber hintereinander zusammengefasst bewegt werden, können mehrere Schüttgutteilmengen-Austragsschritte bei einem einzigen Arbeitshub bewirkt werden. Hierzu ist es zweckmäßig, die Schüttgutschieber in gleicher Weise wie die Austragsöffnungen zu beabstanden. Auf diese Weise wird dieselbe Austragsöffnung von zwei oder noch mehr Schüttgutschiebern hintereinander überfahren. Und bei jedem Überfahren wird eine aufgestaute Schüttgutportion von seiner Staufläche über die Öffnung ausgetragen. Hierdurch ist es nicht nur möglich, die Schüttgutaustragsmenge je Arbeitshub an den Bedarf der Fluidbehandlungsanlage anzupassen, indem mehr oder weniger Schüttgutschieber je Rinne hintereinander eingesetzt werden. Es ist auf diese Weise auch möglich, eine besonders flach bauende Schüttgutaustragsvorrichtung zu verwirklichen, in der der Abstand zwischen jeder Mündungsöffnung eines Schüttgutabzugsrohres und der zugeordneten Staufläche auf dem rinnenförmigen Stauelement besonders gering ist. Damit wird die jeweils gestaute Schüttgutmenge besonders klein. Alle Dimensionierungen der Schüttgutaustragsvorrichtung können entsprechend verringert werden. Dennoch kann je Arbeitshub eine ausreichend große Schüttgutteilmenge aus jedem Schüttgutabzugsrohr ausgetragen werden, weil sich die ausgetragene Schüttgutmenge der Zahl der hintereinander angeordneten Schüttgutschieber entsprechend vervielfacht. Insbesondere ist es möglich, mehrere Schüttgutschieber einer Rinne in einem Schüttgutschieberwagen zusammenzufassen. Ein solcher Wagen lässt sich besonders sicher verschieben und läuft keine Gefahr, in dem rinnenförmigen Stauelement zu verkanten.

Wenn die Schüttgutschieber mehrerer paralleler rinnenförmiger Stauelemente mechanisch zusammengefasst werden, so dass sie gemeinsam bewegt werden können, verringert sich die Zahl der hierfür notwendigen Antriebe entsprechend. Auf diese Weise ist es möglich, sämtliche Reihen von Schüttgutabzugsrohren eines Wanderbettreaktormoduls mit einer einzigen Reihe von Schiebern in einem Arbeitsgang dem Schüttgutteilmengenaustausch zu unterwerfen. Dies ist auch dann möglich, wenn in jedem rinnenförmigen Stauelement mehrere Schüttgutschieber hintereinander angeordnet sind. Auch auf diese Weise wird ein Schüttgutschieberwagen verwirklicht.

Es ist möglich aber nicht zwingend erforderlich, die in einer Reihe nebeneinander angeordneten Schüttgutschieber als ein durchgehendes Element auszuführen. Vielmehr wird es bevorzugt, nur wenige, vorzugsweise zwei, Schüttgutschieber in nebeneinander verlaufenden rinnenförmigen Stauelementen zusammenzufassen und als ein Element auszuführen. Dieses kann insbesondere pendelnd befestigt werden.

Wenn die rinnenförmigen Stauelemente als Konstruktionsbestandteil eines von den Schüttgutabzugsrohren durchdrungenen Zwischenbodens mit diesem verbunden wird, werden zusätzliche Elemente zur Aussteifung eines solchen Zwischenbodens, wie sie in der Vergangenheit erforderlich waren, unter Gewichtseinsparung vermieden.

Die Querschnittsform der rinnenförmigen Stauelemente ist prinzipiell frei wählbar. Als besonders vorteilhaft haben sich standardisierte U-Träger erwiesen, wie sie im Stahlbau Verwendung finden. Derartige Standardprofile weisen eine besonders große Gleichmäßigkeit des inneren Querschnittes auf und sie sind besonders verwindungsarm. Auf diese Weise wird einem Verklemmen der Schüttgutschieber oder ähnliche Unregelmäßigkeiten besonders sicher entgegenwirkt. Die rinnenförmigen Stauelemente dienen der sicheren und wandungsnahen Führung des Schüttgutschiebers.

Wenn die Schüttgutschieber an den Rinnenwandungen auf der Innenseite des Stauelementes spielarm anliegen, wird dadurch vermieden, dass sich Schüttgutpartikel zwischen der Umrisskante des Schüttgutschiebers und der inneren Oberfläche des rinnenförmigen Stauelementes einklemmen und so zerstört werden. Um ein derartiges Anliegen ohne die Gefahr eines Verklemmens aufgrund z. B. Wärmedehnung zu verringern, wird der eigentliche Schüttgutschieber so von seinem Antrieb verselbständigt, dass er zwar in Schieberichtung bewegt wird, sich aber selbständig der Schwerkraft folgend an den Boden des rinnenförmigen Stauelementes anlegt. Ein entsprechender Halter weist dementsprechend Vertikalführungen, wie einen Schlitz oder mindestens ein Langloch auf.

Um die Schüttgutschonung weiter zu verbessern, kann der das rinnenförmige Stauelement berührende Rand des Schüttgutschiebers aus einem anderen Material als der übrige Schieber bestehen, z. B. bürstenförmig gestaltet sein.

Besonders schüttgutschonend ist der Betrieb des oder Schüttgutschieber dann, wenn dessen Verfahrgeschwindigkeit möglichst gering ist, insbesondere bis zu 2,0 m/min., vorzugsweise zwischen 0,5 und 1,5 m/min.

Zusammengefasst wird durch die Erfindung eine Verringerung des Gewichtes, der Bauhöhe, der Schüttgutpartikelzerstörung und/oder der Menge der notwendigen Antriebsvorrichtungen erreicht.

Die der Erfindung zugrunde liegende Aufgabe wird hinsichtlich eines Verfahrens durch die Merkmale des Anspruchs 29 gelöst. Demgemäß ist vorgesehen, die Höhe der Schüttgutbetten zur Anpassung an bestimmte Betriebsbedingungen der Fluidbehandlungsanlage zu vergrößern oder zu verkleinern. Hierzu werden Schüttgutauslassrohre oder Schüttgutaustrittrohre von Schüttgutbetten von Chargierwagen und/oder Schüttgutvorratsbunkern, vorzugsweise gemeinsam gleichmäßig angehoben oder abgesenkt.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel einer Fluidbehandlungsanlage dargestellt ist.

### FIGURENKURZBESCHREIBUNG

In der Zeichnung zeigen
- Fig. 2: eine Fluidbehandlungsanlage im Vertikalschnitt entlang der Rohrkänale (Schnitt entlang der Linie II-II gemäß Fig. 3);
- Fig. 3: von der Fluidbehandlunganlage nach Fig. 2 einen Vertikalschnitt quer zur Erstreckungsrichtung der Rohrkanäle (Schnitt entlang der Linie III-III gemäß Fig. 2);
- Fig. 4A: von der Fluidbehandlungsanlage nach Figuren 2 und 3 einen Chargierwagen in perspektivischer Ansicht von schräg oben;
- Fig. 4B: denselben Chargierwagen im perspektivischer Ansicht von schräg unten;
- Fig. 4C: denselben Chargierwagen in einer Seitenansicht;
- Fig. 4D: denselben Chargierwagen in Ansicht von unten;
- Fig. 4E: denselben Chargierwagen in einer vergrößerten Detailansicht von oben;
- Fig. 5: von demselben Chargierwagen eine vergrößerte Detailansicht; sowie
- Fig. 6: eine alternative Ausführungsform einer Fluidbehandlungsanlage in Vertikalansicht;
- Fig. 7A: eine weitere alternative Ausführungsform einer Fluidbehandlungsanlage im Vertikalschnitt entsprechend Figur 2;
- Fig. 7B: von derselben Fluidbehandlungsanlage eine Detailansicht des Chargierkanals in Befüllstellung des Chargierwagen;
- Fig. 8: von einem einzigen Wanderbettreaktormodul einer Fluidbehandlungsanlage einen Ausschnitt von dessen Anströmboden mit Austragsvorrichtung in perspektivischer Ansicht;
- Fig. 9: von derselben Fluidbehandlungsanlage eine erste Ausführungsform einer Schüttgutaustragseinrichtung bei Fortlassen des Anströmbodens und des Schüttgutabtransportwagens;
- Fig. 10: von der Austragsvorrichtung nach Fig. 9 einen schematisierten Vertikalschnitt entlang der Linie IV-IV gemäß Fig. 9;
- Fig. 11: eine alternative Ausführungsform zu der Schüttgutaustragseinrichtung nach Fig. 8 und 9, 10 in perspektivischer Ansicht;
- Fig. 12: von der Schüttgutaustragseinrichtung nach Fig. 11 eine vergrößerte Detailansicht bei Fortlassen des Zwischenbodens;
- Fig. 13: für eine Fluidbehandlungsanlage nach Fig. 8 eine weitere alternative Ausführungsform der Schüttgutaustragseinrichtung in perspektivischer Darstellung unter Fortlassen der rinnenförmigen Stauelemente sowie
- Fig. 14: von der Schüttgutaustragseinrichtung nach Fig. 13 eine Zusammenschau eines Schüttgutschieberwagens mit einem rinnenförmigen Stauelement.

### DETAILLIERTE BESCHREIBUNG DER AUSFÜHRUNGSBEISPIELE

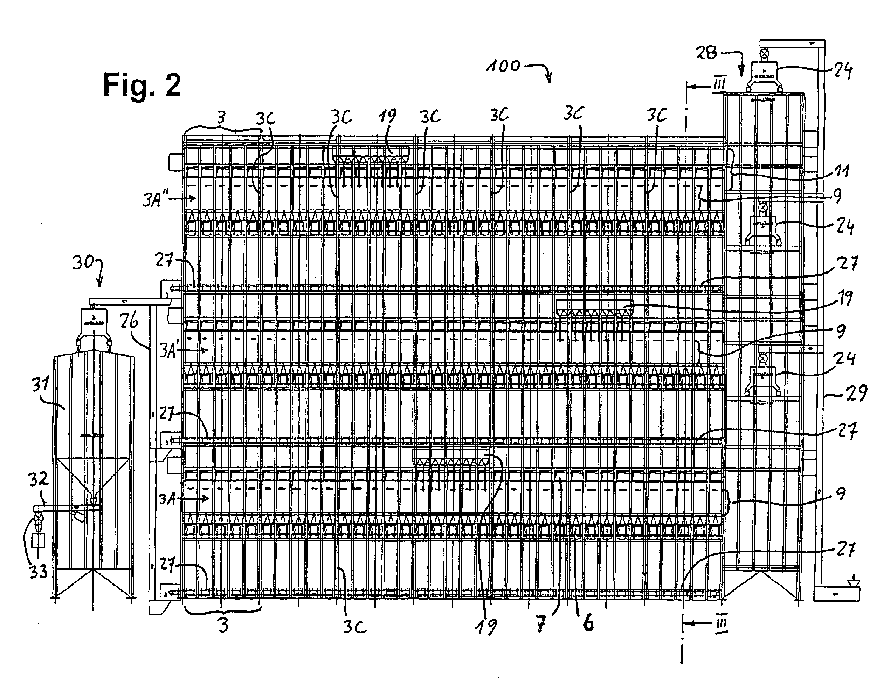

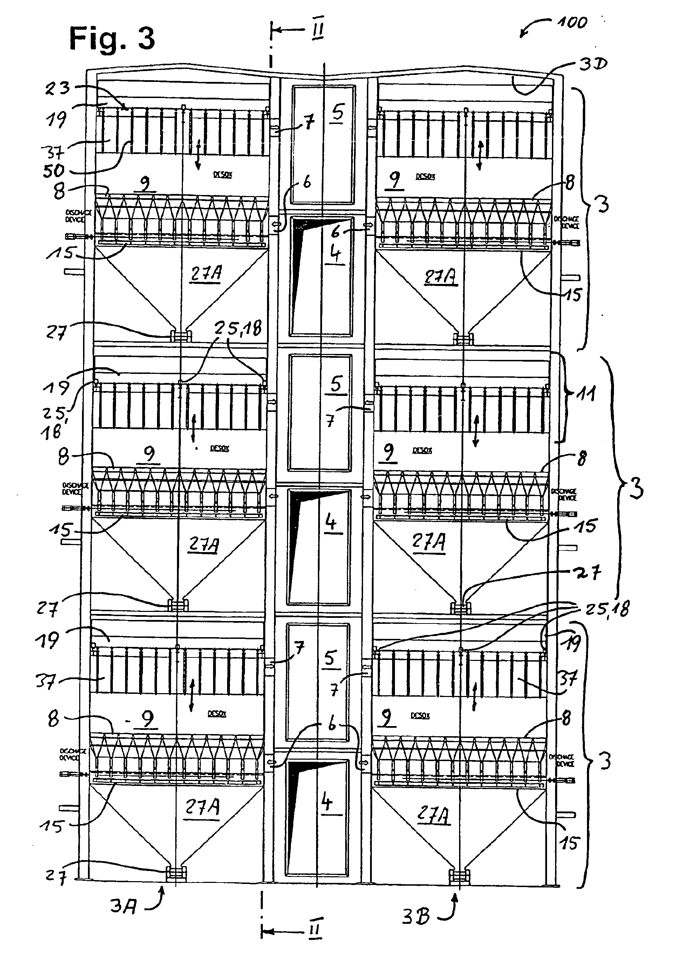

Die in Figur 2 und 3 dargestellte Fluidbehandlungsanlage 100 ist dreietagig aufgebaut und besteht, wie aus Figur 3 ersichtlich, aus zwei mal drei Reihen 3A, 3A', 3A" von übereinander angeordneten Wanderbettreaktormodulen 3, die paarweise parallel zu einander angeordnet und lediglich von Zuströmkanälen 4 und Abströmkanälen 5 für zu behandelndes bzw. behandeltes Fluid beabstandet sind. Anströmfenster 6 und Abströmfenster 7 verbinden jedes Wanderbettreaktormodul 3 mit dem zugeordneten Zuströmkanal 4 bzw. Abströmkanal 5. Bei der in Figur 2 ersichtlichen Gestaltung sind jeweils sieben Wanderbettreaktormodule nebeneinander angeordnet und durch senkrechte Trennwände 3C von einander auf einer Teilhöhe getrennt und im Bereich der Schüttgutzuführung (Chargierkanal 11) und der Schüttgutabführung (Förderband 27) unterbrochen. Die höhenveränderbaren Schüttgutbetten 9 in einer Reihe 3A, 3A', 3A" von Wanderbettreaktormodulen 3 sind also in ihrem oberen Bereich miteinander verbunden, wenn die (weiter unten beschriebenen) Schüttgutdurchleitrohre 50 der Schüttgutzuführung nicht ihre maximale Länge haben.

In Figur 2 ist rechts ein Chargierturm 28 ersichtlich, der über einen ersten Schüttgutlift 29 und drei übereinander liegende Vorratssilos 24 die (weiter unten beschriebenen) Chargierwagen 19 auf jeder der drei Etagen mit Schüttgut beladen kann. In Figur 2 ist am linken Bildrand eine Sammel- und Abtransporteinrichtung 30 für gebrauchtes Schüttgut erkennbar. Am unteren Ende jeder Reihe von sieben Wanderbettreaktormodulen 3 befindet sich ein entlang der Anlagenachse durchlaufendes Förderband 27 unterhalb von Schüttgutsammeltrichtem 27A. Alle sechs Förderbänder münden am in der Zeichnung linken Ende der Reaktormodulreihen in einem zweiten Schüttgutlift 26 der alles Schüttgut in einem Großsilo 31 sammelt. Das Großsilo ist über eine Vibrationsrinne 32, die eine Zellenrandschleuse 33 speist entleerbar, um gebrauchtes Schüttgut z.B. einer Regenerationsanlage, die nicht Gegenstand der Erfindung ist, zuzuführen.

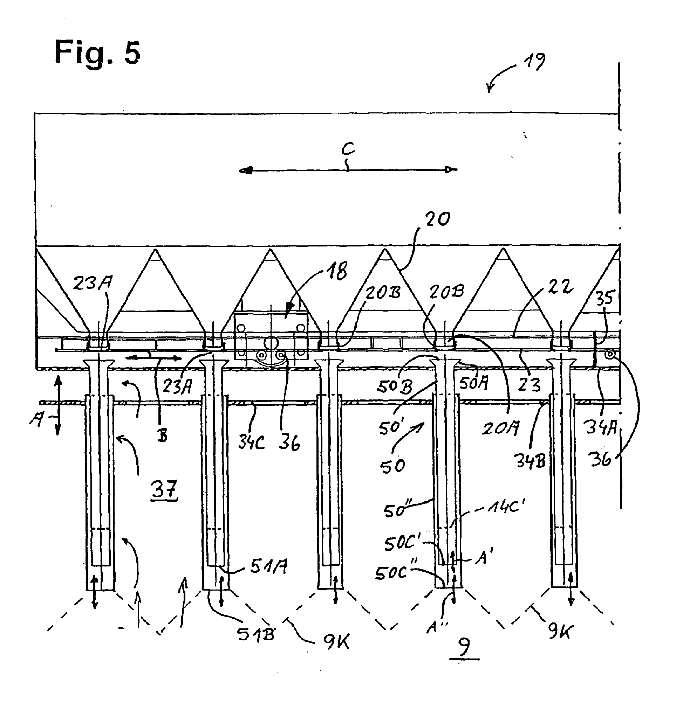

Die sechs Reihen von Wanderbettreaktormodulen weisen jeweils in ihrem oberen Bereich einen durchgehenden Chargierkanal 11 auf, durch den auf geeigneten Führungsmitteln in an sich bekannter Weise ein Chargierwagen 19 mit Fahrwerk 18 von der Chargierposition im Chargierturm 28 über alle Wanderbettreaktormodule derselben Reihe verfahrbar (Doppelpfeil C - Fig.5) ist.

Die in Figuren 2 und 3 ebenfalls erkennbaren Anströmböden 8 für die insgesamt 42 Wanderbettreaktormodule sind vorzugsweise von der gleichen Bauart, wie aus der EP 257653 B1 bekannt. Um die Dosiermenge beim Schüttgutteilaustausch auf einfache Weise an die Bedürfnisse anzupassen und gleichzeitig das Anlagengewicht gleich oder möglichst geringer zu halten, kann als Schüttgutaustragsvorrichtung 15 anstelle der aus der EP 257653 B1 bekannt bekannten Dosierfinger ein in Schwingbewegungen versetzbares längliches Verschließelement, wie ein Schwingblechstreifen oder ein schwingbares Kastenprofil verwendet werden. Durch Verändem der Schwingungsamplitude oder der Schwingungsfrequenz kann auch unabhängig von der Schwingungsdauer die Dosiermenge beim Schüttgutteilaustausch auf einfache Weise variiert werden.

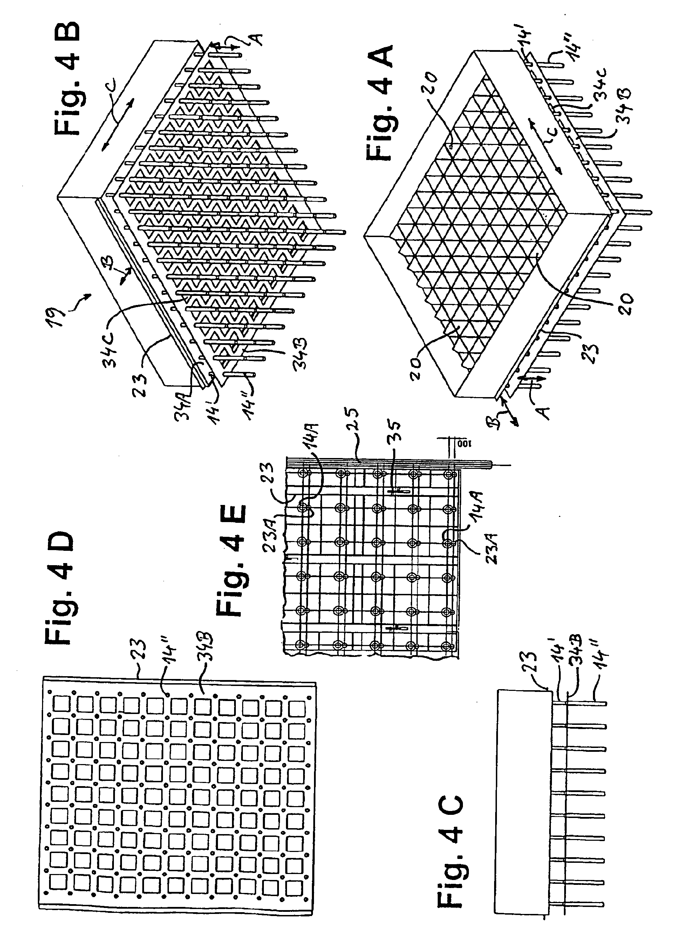

Wie aus den Figuren 4A bis 5 ersichtlich, kann der Chargierwagen - wie aus der WO/2001/017663 bekannt - als wanderförmiger Aufnahmekasten mit gleichmäßig über die gesamte Bodenfläche verteilten Auslasstrichtem 20 aufgebaut sein. Unterhalb jedes Auslasstrichters befindet sich - bei diesem Ausführungsbeispiel - ein teleskopierbares Schüttgutauslasssrohr 50, das mit geringem Abstand unterhalb der Auslassmündung 20A der Auslasstrichter 20 beginnt. Die Auslassmündungen 20A liegen alle auf demselben Höhenniveau und der Abstandsspalt zu den Eintrittsöffnungen 14B der Schüttgutdurchleitrohre 50 ist ausreichend groß, um ein plattenförmiges horizontal schiebbares (Doppelpfeil B) Schüttgut-Absperrorgan 23 in den Abstandsspalt einschieben zu können. Dies geschieht bevorzugt in Form einer entsprechend durchlochten Platte, wie sie aus der WO 2001/01763 an sich bereits bekannt ist. Die ganze Platte muss um etwas mehr als den Durchmesser der Durchlochung 23A in eine Richtung verschoben werden, um sämtliche Schüttgutauslässe insgesamt zu verschließen oder insgesamt freizugeben. Kurze Rohrabschnitte 20B sind mit seitlichem Spiel über die Auslassmündungen20A der Auslasstrichter20 geschoben und ruhen lose auf der Platte des Schüttgut-Absperrorgans 23, so dass sie deren Durchlochungen 23A umgeben und eine Schüttgutansammlung auf der Platte des Schüttgut-Absperrorgans verhindem. Zur Führung des Schüttgut-Absperrorgans 23 dienen Tragrollen 36, die an Tragmitteln 35, wie Laschen, die auch die oberen Schüttdurchleitrohre 50' tragen, drehbar befestigt sein können. Unterhalb des Schüttgut-Absperrorgans und parallel zu diesem streckt sich ein (erstes) Tragelement 34A für sämtliche obere Schüttgutauslassrohre 50'. Dieses kann auch - wie nicht dargestellt - aus zwei vertikal beabstandeten Platten nach Art eines Sandwich-Aufbaus ausgestaltet sein. Es kann ferner eine Bodenplatte des Chargierwagens 19 bilden und/oder trichterförmige Erweiterungen 50A der Schüttgutauslassrohre 50' aufnehmen, die durch Verschweißen mit dem ersten Tragelement 34A an deren oberen oder unteren Trichterenden verbunden sein können. Die oberen Schüttgutauslassrohre 50' sind an die unteren Mündungsenden der trichterförmigen Erweiterungen, z.B. durch Schweißen, angesetzt. Der Chargierwagen kann im Sinne der Erfindung allein mit diesen oberen Schüttgutdurchleitrohren 50' betrieben werden.

Wenn Betthöhenanpassungen gewünscht werden, können die Schüttgutdurchleitrohre 50' mechanisch gekürzt oder durch Verbinden mit Rohrverlängerungsstücken verlängert werden. Eine raschere und einfacher zu bewerkstelligende Betthöhenanpassung wird dadurch erreicht, dass untere Schüttgutdurchleitrohre 50" teleskopartig (in entsprechender Rasterung wie die oberen Schüttgutauslassrohren 50') von mindestens einem zweiten Tragelement 34B auf gegenseitigen Abstand und in gleicher Höhe gehalten werden und von unten über die Mündungsenden der oberen Schüttgutdurchleitrohre 50' geführt werden. Die Betthöhenanpassung kann dann im Prinzip auch während des Betriebs der Fluidbehandlungsanlage erfolgen, indem das zweite Tragelement 34B insgesamt bezüglich des Chargierwagens 19 angehoben oder abgesenkt wird (Doppelpfeil A).

Eine einfach gestaltete und leicht gewichtige Zusammenfassung der unteren Teleskoprohre geschieht durch eine großflächige Gitteranordnung als zweites Tragelement, insbesondere - wie dargestellt - in Gestalt einer zwischen den Teleskoprohren großflächig durchbrochenen Metallplatte, so dass die Abströmungswege des behandelten Fluides innerhalb des Gasabströmraumes 37 nicht merklich behindert werden. Der Gasabströmraum wird durch das in sich geschlossene erste Tragelement 34A und die Höhe der Schüttgutdurchleitrohre 50 definiert.

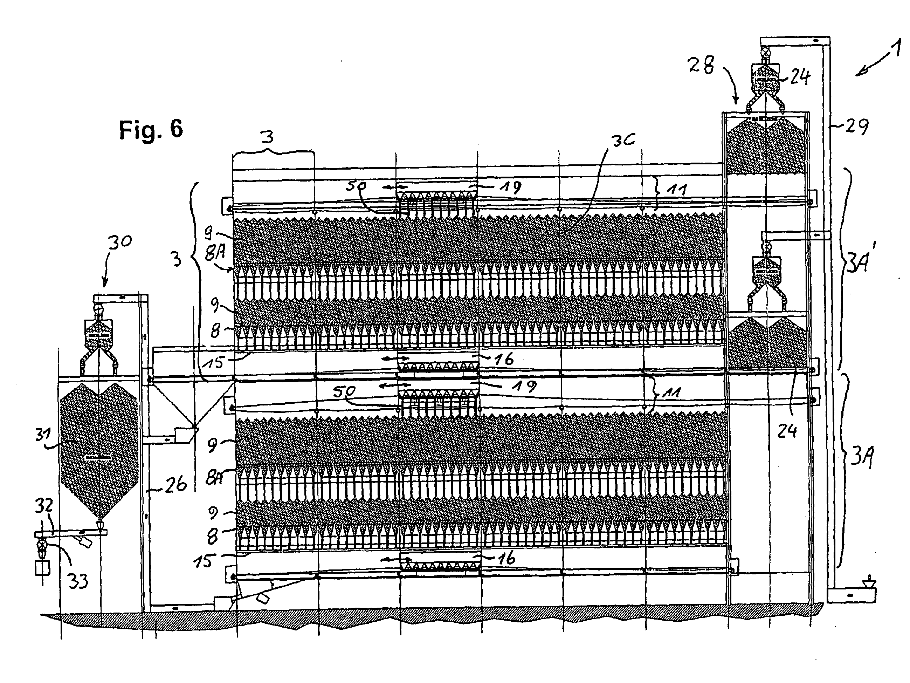

Während bei dem Ausführungsbeispiel nach Figuren 2 und 3 eine dreietagige Fluidbehandlungsanlage für einstufige Schüttgutbetten dargestellt ist, bei der in jedem der Wanderbettreaktormodule derselbe Prozess stattfindet, z.B. die Entfernung von SO₂ aus einem Rauchgas (DESOX), zeigt das Ausführungsbeispiel nach Figur 6 eine zweietagige Fluidbehandlungsanlage, bei der in jeder Etage ebenfalls jeweils sieben Wanderbettreaktormodule in einer Reihe angeordnet sind und zwei parallele Reihen durch einen dazwischen liegenden Zuströmkanal 4 und Abströmkanal 5 für zu behandelndes Fluid bzw. behandeltes Fluid von einander beabstandet sind. In jeder der beiden Etagen läuft derselbe Prozess ab. Bei diesem Ausführungsbeispiel ist allerdings ein zweistufiger Fluidbehandlungsprozess vorgesehen, wie er z.B. in der WO/... für die Entfernung von NOx mit vorgeschalteter Reinigung von SOx aus einem Rauchgas beschrieben wird. Jedes Wanderbettreaktormodul ist daher doppelstöckig, indem es einen 2. Anströmboden 8A aufweist. Bei dem in Figur 6 dargestellten Ausführungsbeispiel ist nicht nur für die Schüttgutzuführung ein Chargierwagen vorgesehen, sondern auch ein Schüttgutaustragungswagen 16, der in seiner Bauart dem Chargierwagen 19 entsprechen kann, wobei beide Wagentypen den in Figuren 4A bis 5 gezeigten Aufbau haben können.

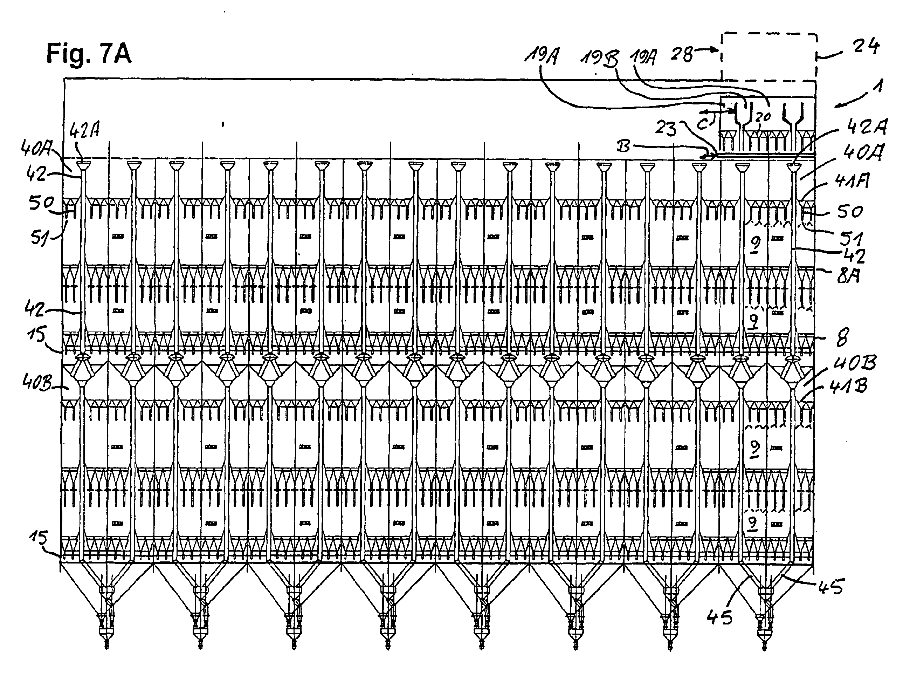

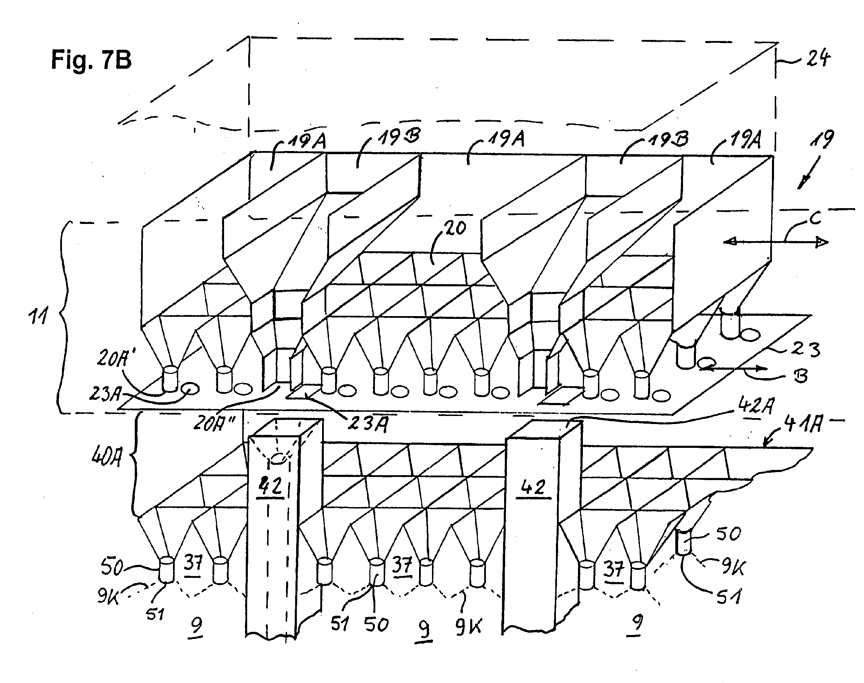

Das Ausführungsbeispiel nach Fig. 7A/7B zeigt eine Ausführungsform der Erfindung, bei der sich oberhalb der übereinanderliegenden Schüttgutbetten 9C, 9E - anders als bei dem Ausführungsbeispiel nach Figuren 2 und 3 - oberhalb jedes Schüttgutbettes 9D, 9E ein Schüttgutvorratsbunker 40A, 40B als Zwischenbunker befindet. Unterhalb jedes der Schüttgutvorratsbunker befindet sich ein Zwischenboden 41A, 41B, der als Schüttgutverteilboden dient, durch welchen das Schüttgut aus dem darüberliegenden Vorratsbunker in das darunterliegende Schüttgutbett durchtreten kann. Der Zwischenboden stellt - anders als in Figuren 1 und 3, welche einen solchen Zwischenboden nicht zwingend aufweisen - die Decke des Gasabströmraumes 37 des zugehörigen Schüttgutbettes dar. Das in dem Schüttgutbett behandelte Fluid kommt also mit dem Schüttgut des darüberliegenden Schüttgutbunkers praktisch nicht in Kontakt, da der Vorratsbunker praktisch dicht verschlossen werden kann, so dass er von dem behandelten Fluid nicht durchströmt wird. Der einzige Chargierkanal befindet sich in diesem Fall oberhalb des oberen Zwischenbodens und unterhalb der Decke 3D in einem im Wesentlichen gasdicht gehaltenen Raum.

Der Chargierwagen 19 ist - anders als das Ausführungsbeispiel nach Figuren 2 und 3 - in Bunkerbereiche 19A, 19B unterteilt, von dem die einen dem Befüllen des obersten und die anderen dem Befüllen des darunterliegenden Schüttgutbettes 9D, 9E dienen. Unterhalb der Auslassmündungen 20A', 20A" der Bunkerbereiche 19A, 19B befindet sich ein Schüttgut-Absperrorgan 23, der in Figur 5 im Prinzip gezeigten und im dortigen Zusammenhang beschriebenen Bauart. Dasselbe gilt auch für das Fahrwerk 18. Unterhalb der Auslassmündungen 20A' des Bunkerbereichs 19A befinden sich die Schüttgutkegelspitzen des in dem darunter gelegenen Schüttgut-Vorratsbunker 40A zwischengespeicherten gespeicherten Schüttgutes. Dem Schüttgut-Vorratsbunker 40A (Zwischenbunker) kommt also eine einer Schüttgutschleuse ähnliche Funktion zu, wobei aber untere Schüttgutabsperrorgane fehlen, da die Schüttgutkegel 9K des Schüttgutbettes 9 im Ruhezustand verhindern, dass Schüttgut aus dem Schüttgut-Vorratsbunker 40A nach unten entweicht.

Die Schüttgutauslassmündungen 20A" des oder der zweiten Bunkerbereiches 19B des Chargierwagens 19 sind oberhalb der oberen Mündungsöffnungen 42A von sich nach oben ggf. konisch erweiternden und dem Zwischenboden 41A nach oben überragenden Chargierrohren 42 positioniert, wenn sich der Chargierwagen in seiner Chargierposition oberhalb eines Schüttgutbettes befindet. Auf diese Weise bleibt der Zwischenbunker 40A für das obere Schüttgutbett 9D reserviert und auch das untere Schüttgutbett 9E kann mittels des einzigen Chargierwagens während eines Schüttgutteilaustausches mit neuem Schüttgut versorgt werden. Dies geschieht automatisch in der Menge, in der Schüttgut durch die Schüttgutaustragsvorrichtung (Förderband 27) oder Schüttgutaustragsvorrichtung 15, wie z. B. aus der EP 0357653 B1 des Anmelders bekannt und im Zusammenhang mit Figur 1 beispielhaft beschrieben, ausgetragen wird. Am unteren Ende der Chargierrohre 42 befindet sich ein ansich bekannten Zwischenbunker 40B, welcher eine ähnliche Funktion wie die des oberen Zwischenbunkers 40A inne hat.

Auch bei diesem Ausführungsbeispiel wird als Schüttgut-Absperrorgan 23 des Chargierwagens eine durchlochte und verschiebbare Platte benutzt, wie sie prinzipiell im Zusammenhang mit Figur 5 bereits beschrieben wurde. Die Bewegung der Platte zum Öffnen und Verschließen der Auslassmündungen 20A', 20A" ist die gleiche wie im Zusammenhang mit Figur 5 beschrieben. Wenn sich die Platte in Öffnungsstellung befindet, läuft Schüttgut aus dem Bunkerbereich 19A oder 19B nach unten aus dem Chargierwagen heraus in den zugehörenden Zwischenbunker 40A, 40B, wenn am unteren Ende des entsprechenden Schüttbettes 9D, 9E ein Schüttgutteilabzug erfolgt. Der Chargierwagen wird bei geschlossenem Schüttgut-Absperrorgan 23 von einer Position in die nächste verfahren.

Anders als bei dem Ausführungsbeispiel nach Figur 2, ist ein Chargierturm 28 seitlich der Wanderbettreaktormodule 3 entbehrlich. Vielmehr kann die Befüllung des Chargierwagens 19 über ein gasdichtes Vorratssilo 24 auf dem Dach der Wanderbettreaktoranlage erfolgen. Die Übertrittsöffnungen zwischen diesem Vorratssilo 24 und dem Chargierwagen 19 durch die Decke der Wanderbettreaktoranlage erfolgt mittels gasdicht verschließbarer, insbesondere schleusenartiger Mittel.

Die Merkmale aus den Figuren können so gut wie beliebig im Sinne der Erfindung miteinander kombiniert werden.

Durch die paarweise angeordneten Reihen von Wanderbettreaktormodulen in mehreren Etagen, wird eine höchst kompakte Anlagenform geschaffen, die an gegebene Platzverhältnisse sehr gut anpassbar und thermisch und strömungstechnisch besonders günstig ist. Die gesamte Fluid-Behandlungsfläche kann bei vergleichsweise geringem Anlagengewicht außerordentlich groß sein und ist auch z.B. für Gasreinigungszwecke mit außerordentlich großen stündlichen Gasmengen von z.B. 1 Million Normkubikmeter und mehr geeignet.

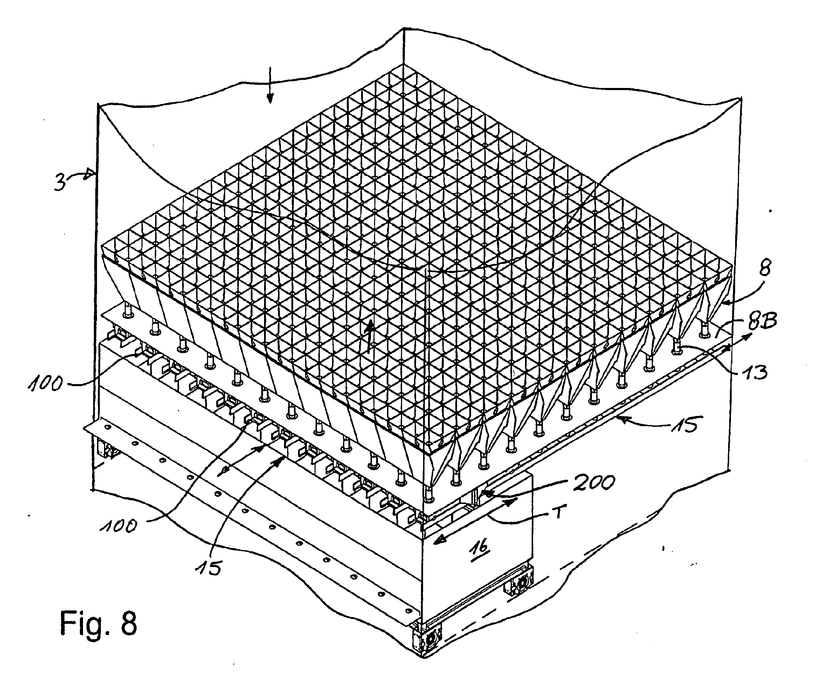

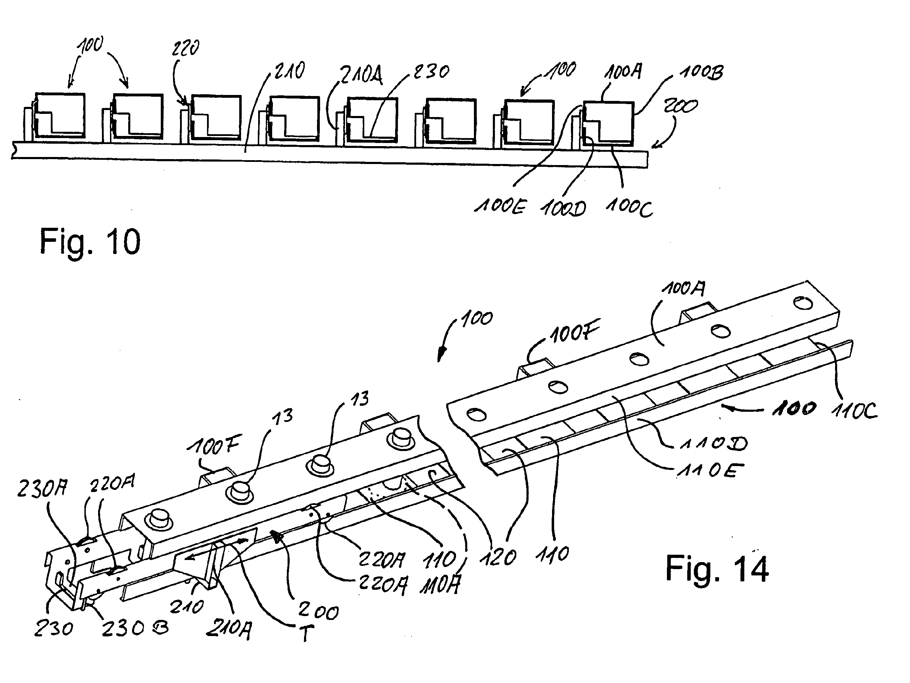

Gemäß dem Ausführungsbeispiel nach Figur 8 ist in jedem von vorzugsweise mehreren in Reihe hintereinander angeordneten Wanderbettreaktormodulen 3 ein Anström- und Schüttgutabzugsboden 8 vorgesehen, wie er u. a. aus der EP 0 257 653 B1 bekannt ist. Die an Schüttgutaustrittsrinnen sich nach unten anschließenden Schüttgutabzugsrohre 13 sind teleskopartig aufgebaut und sitzen mit einer Rosette auf einem Zwischenboden 8B rasterartig auf. Sie können die Lochungen 8C des Zwischenbodens 8B durchsetzen und in einem festgelegten Abstand darunter münden (Fig. 14). Der Zwischenboden 8 wird von einer als Schüttgutaustragseinrichtung 15 gestalteten Unterkonstruktion getragen. Unterhalb der Schüttgutaustragseinrichtung 15 kann ein Schüttgutaustragswagen 16 bei seiner Fahrt durch einen Schüttgutaustrittskanal, der mehrere Wanderbettreaktormodule in einer Reihe im unteren Bereich miteinander verbindet, zur Schüttgutaufnahme mitbewegt werden.

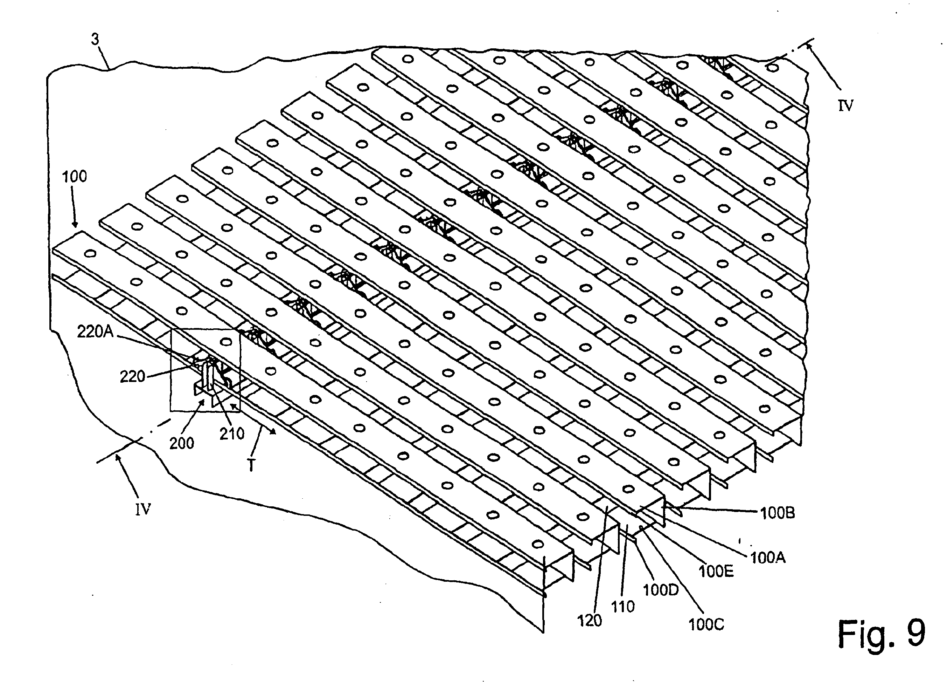

Die in Figuren 9 und 10 näher dargestellte Schüttgutaustragseinrichtung 15 kann aus sich über die Reaktorbreite erstreckenden Profilen 100 mit C-förmigem oder ähnlichem Profilquerschnitt bestehen. Die Profiloberseite ist in rasterartigen Abständen so durchlocht, dass die Mündungen der Schüttgutabzugsrohre 13 etwa den gleichen Querschnitt besitzen oder dort hindurchpassen. Dieser obere Profilschenkel 100A dient als Auflage für den Zwischenboden 8B. An eine seitliche Längskante des oberen Profilschenkels 100A schließt sich ein, vorzugsweise geschlossener, seitlicher im Wesentlichen vertikaler Profilschenkel 100B an. An dessen unterer Kante schließt sich wiederum ein horizontaler unterer Profilschenkel 100C an. Dieser besteht aus in regelmäßigen Abständen vorgesehenen Schüttgutstauflächen 110 und zwischen diesen angeordneten Öffnungen (Bodenöffnungen) 120. Die Stauflächen 110 befinden sich im Wesentlichen zentral unterhalb des jeweils zugeordneten Schüttgutabzugsrohres 13 des darüber gelegenen Schüttgutabzugsbodens 8. An den unteren Profilschenkel 100C schließt sich an der dem seitlichen Profilschenkel 100B gegenüberliegenden Kante eine Seitenwand 100D mit etwa vertikaler Ausrichtung an, die mit einer Seitenwand 100E fluchtet, die sich in ebenfalls vertikaler Ausrichtung an die dem seitlichen Profilschenkel 100B gegenüberliegende Kante des oberen Profilschenkels 100A anschließt. Auf diese Weise entsteht ein im Querschnitt etwa C-förmiges Kastenprofil, bei dem die zwischen den freien Kanten der fluchtenden oberen und unteren Seitenwand 100D und 100E gegenüberliegende Führungsschienen für einen Schüttgutschieberwagen 200 bilden. Der seitliche Profilschenkel 100B, der untere Profilschenkel 100C und die untere Seitenwand 100D bilden ein rinnenförmiges Stauelement mit zwischen den Stauflächen 110 gelegenen Austragsöffnungen 120. Bei dem hier dargestellten Ausführungsbeispiel ist eine Vielzahl von Reihen von Schüttgutabzugsrohren 13 parallel nebeneinander angeordnet. Entsprechend viele Profile 100 sind in entsprechenden Abständen vorgesehen.

Der in Figur 10 dargestellte Schüttgutschieberwagen 200 erstreckt sich rechtwinklig zu den Profilen 100. Eine Traverse 210 trägt an aufrechten Armen 210A, die zwischen den Seitenabständen benachbarter Profile 100 hindurchgreifen je ein Fahrwerk 220, dessen rollenden oder gleitenden Führungselemente 220A, welche in dem dargestellten und insoweit bevorzugten Ausführungsbeispiel als Schienenräder ausgeführt sind, zwischen der Oberkante der unteren Seitenwand 100D und der Unterkante der oberen Seitenwand 100E auf Schienen laufen, so dass eine stabile Führung gegeben ist. An das Fahrwerk 220 schließt sich ein Schüttgutschieber 230 an, der streichend den Querschnitt des rinnenförmigen Stauelementes auf der Länge des Profils 100 durchfährt, wenn der Schüttgutschieberwagen 200 in Längserstreckungsrichtung T der Profile 100 von einem gemeinsamen Antrieb verfahren wird. Der einzige Schüttgutschieber je Rinne überfährt also im Wechsel Stauflächen 110 und Austragsöffnungen 120. Wegen der vorzugsweise gleichmäßigen und vergleichsweise langsamen Fahrgeschwindigkeit des Schüttgutschieberwagens 200 von bis zu 2,0 m/min. und weniger, wird das Schüttgut außerordentlich gut geschont.

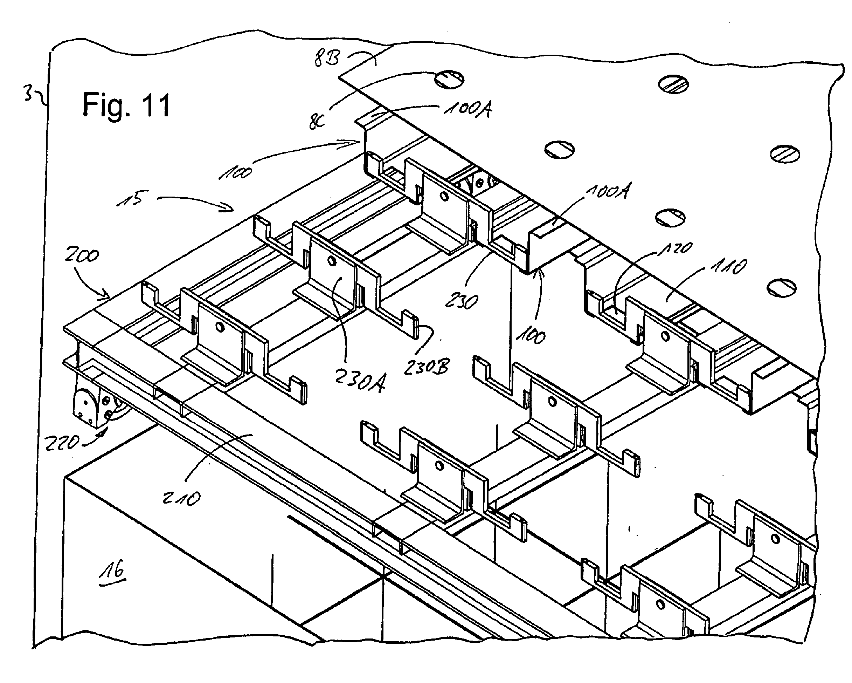

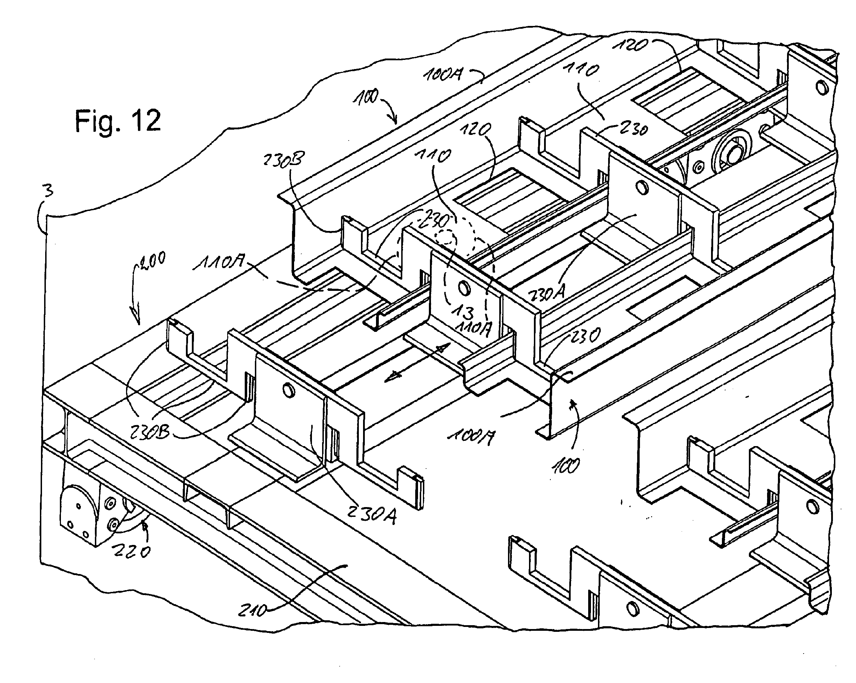

Das Ausführungsbeispiel nach Figuren 11 und 12 unterscheidet sich von dem vorangehenden zunächst dadurch, dass die die rinnenförmigen Stauflächen bildenden Profile 100 paarweise mit seitlichem Abstand voneinander angeordnet und im Wesentlichen U-förmig mit leichter Asymmetrie gestaltet sind. Der jeweils außen liegende, etwas längere U-Schenkel ist an seiner Oberkante mit einem oberen Profilschenkel 100A zum Auflegen und Tragen und ggf. befestigen des Zwischenbodens 8B versehen. Die Schüttgutschieber 230 sind paarweise miteinander verbunden und im Bereich des Zwischenraumes eines jeden Profilpaares durch einen Halter 230A leicht pendelnd aufgehängt, um auch bei leichten Verwerfungen der Profile 100 störungsfrei durch die vom Profil gebildete Schüttgutrinne verfahrbar zu bleiben. Eine weitere Besonderheit dieses Ausführungsbeispiels besteht darin, dass mehrere, im Ausführungsbeispiel vier, Schüttgutschieberpaare 230 im Abstand benachbarter Schüttgutabzugsrohre 13 hintereinander angeordnet sind, so dass bei einem einzigen Durchfahren der Schüttgutschieber durch die rinnenförmigen Stauelemente 100 von jeder Staufläche vier mal hintereinander Schüttgut abgeräumt und ausgetragen wird. In dem dargestellten Ausführungsbeispiel sind wiederum die Schüttgutschieber 230 sämtlicher benachbarter rinnenförmiger Stauelemente 100 zu einem Schüttgutschieberwagen 200 miteinander verbunden.

Ferner ist diesem Ausführungsbeispiel entnehmbar, dass die die rinnenförmigen Wandungen der Stauelemente 100 streifend berührenden Kanten der Schieber 230 in besonderer Weise aufgebaut sind, und zwar in dem Ausführungsbeispiel bürstenförmig (Randstreifen 230B). Der Figur 11 ist im Übrigen ebenfalls ein Schüttgutaustragswagen 16 entnehmbar, der mit dem Schüttgutschieberwagen 200 antriebsverbunden sein kann, so dass beide Wagen mit einem einzigen Antrieb gemeinsam den Austragskanal durchfahren.

Aus Fig. 12 ist im Übrigen beispielhaft ersichtlich, wie sich ein Schüttgutkegel 110A zwischen der Mündung eines Schüttgutabzugsrohres und einer Staufläche 110 ausbildet.

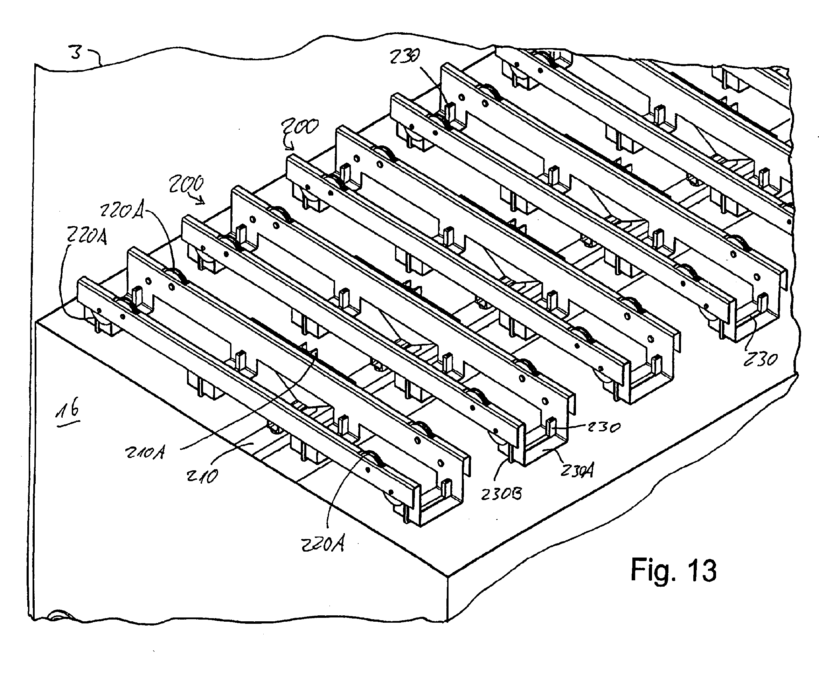

Das Ausführungsbeispiel nach Figuren 13 und 14 unterscheidet sich von den beiden vorangehenden dadurch, dass für jedes rinnenförmige Stauelement 110 aus zwei zueinander sich öffnenden U-Profilen ein eigens oben und unten geführter Schüttgutschieberwagen 200 vorgesehen ist, der in dem dargestellten und insoweit bevorzugten Ausführungsbeispiel hintereinander im Abstand der Schüttgutabzugsrohre 13 vier Schüttgutschieber 230 aufweist, deren Halter 230A die Schüttgutschieber 230 in schlitzförmigen Aufnahmen führt, so dass sie durch ihre Gewichtskraft sanft am Rinnenboden aufliegen. Wenn die Randstreifen 230B der Schüttgutschieber 230 wiederum aus einem anderen Material, z. B. bürstenförmig, aufgebaut sind, können die Schüttgutschieber 230 auch starr an der Vorder- und Hinterseite der Halter 230A (nicht dargestellt) angeordnet sein und das Schüttgut somit bei Vorwärts- und Rückwärtsfahrt des Wagen 200 noch optimaler schonen. Die benachbarten Schüttgutschieberwagen 200 werden von einem gemeinsamen Antrieb bewegt, wobei eine Traverse 210 wiederum mit vertikalen Armen 210A verbunden sind, die seitlich zentral an dem jeweiligen Schüttgutschieberwagen 200 angreifen. Die so gestalteten Schüttgutschieberwagen 200 können mit einem gewissen Spiel zueinander montiert sein, so dass sie auch bei Verformungen der rinnenförmigen Stauelemente 100 die Schieber verhakungsfrei verfahrbar sind. In Figur 14 sind von einem rinnenförmigen Stauelement 100 im rechten Bildteil die Schüttgutabzugsrohre fortgelassen, während im linken Bildteil ein Zwischenboden ebenfalls nicht dargestellt ist. Ein seitlicher Profilschenkel 100B wird teilweise in Gestalt von Verbindungselementen 100F verwirklicht. Die Staufunktion übernimmt allein das untere U-Profileisen.

An Stelle einen Schüttgutaustragswagen 16 aufzunehmen, kann der Schüttgutaustragskanal, der mehrere Wanderbettreaktormodule 3 einer Reihe miteinander verbindet, trichterförmig gestaltet sein und mit einem Längsfördermittel, wie einem Transportband, einer Vibrationsrinne oder dergleichen zum Schüttgutabtransport zu einer Stirnseite der Anlage hin ausgestattet sein.

**BEZUGSZEICHENLISTE**

| | | | |
|---|---|---|---|
| Stand der Technik | | 3 | Wanderbettreaktormodule |
| 1' | Fluidbehandlungsanlage | 3A | Reihe |
| 2' | Rohrkanal | 3A' | Reihe |
| 3' | Wanderbettreaktormodule | 3A" | Reihe |
| 4' | Zuströmkanal | 3B | Reihen |
| 5' | Abströmkanal | 3C | Trennwände |
| 6' | Anströmfenster | 3D | Moduldecke |
| 7' | Abströmfenster | 4 | Zuströmkanal |
| 8' | Anströmboden | 5 | Abströmkanal |
| 9' | Schüttgutbett | 6 | Anströmfenster |
| 10' | Rohrkanaldecke | 7 | Abströmfenster |
| 11' | Chargierkanal | 8 | Anström- und Schüttgutabzugs-boden |
| 12' | Gasverteilraum | | |
| 13' | Schüttgutaustrittsrohre | 8A | Anströmboden |
| 14' | Schüttgutauslassrohre | 8B | Zwischenboden |
| 15' | Schüttgutaustragungsvorrichtung | 8C | Lochungen |
| 15A' | Stauplatte | 9 | Schüttgutbett |
| 15B' | Austragsfinger | 9A-E | Schüttgutbetten |
| 15C' | Seitenkanten | 9K | Schüttgutkegel |
| 16' | Schüttgutaustragswagen | 10 | Rohrkanaldecke |
| 18' | Fahrwerk | 11 | Chargierkanal |
| 19' | Chargierwagen | 12 | Gasverteilraum |
| 20' | Auslauftrichter | 13 | Schüttgutabzugsrohre |
| 21' | untere Mündung | 15 | Schüttgutaustragungseinrichtung |
| 23' | Schüttgut-Absperrorgan | 16 | Schüttgutaustragswagen |
| 37' | Gasabströmraum | 17 | Förderband |
| | | 18 | Fahrwerk |
| Erfindung | | 19 | Chargierwagen |
| 1 | Fluidbehandlungsanlage | 19A | Bunkerbereich |
| 2 | Rohrkanal | 19B | Bunkerbereich |
| 20 | Auslasstrichter | 45 | Schüttgut-Austragsrohr |
| 20A | Auslassmündungen | 46 | Schüttgut-Austragsorgan |
| 20A' | Auslassmündungen | 50 | Schüttgutdurchleitrohre |
| 20A" | Auslassmündungen | 50' | Schüttgutdurchleitrohre |
| 20B | Rohrabschnitte | 50" | Schüttgutdurchleitrohre |
| 22 | Staubblech | 50A | Erweiterung |
| 23 | Schüttgut-Absperrorgan | 50B | Eintrittsöffnung |
| 23A | Durchlochung | 51A,B | Schüttgutauslassmündungen |
| 24 | Vorratssilo | 100 | Profil |
| 25 | Führungsmittel | 100A | oberer Profilschenkel |
| 26 | zweiter Schüttgutlift | 100B | seitlicher Profilschenkel |
| 27 | Förderband | 100C | unterer Profilschenkel |
| 27A | Schüttgut-Sammeltrichter | 100D | untere Seitenwand |
| 28 | Chargierturm | 100E | obere Seitenwand |
| 29 | erster Schüttgutlift | 100F | Verbindungselemente |
| 30 | Sammel- und Abtransporteinrichtung | 110 | Stauflächen |
| 31 | Großsilo | 110A | Schüttgutkegel |
| 32 | Vibrationsrinne | 120 | Öffnungen |
| 33 | Zellenrandschleuse | 200 | Schüttgutschieberwagen |
| 34A | erstes Tragelement | 210 | Traverse |
| 34B | zweites Tragelement | 210A | Arme |
| 34C | Durchbrechungen | 230 | Schüttgutschieber |
| 35 | Tragmittel | 230A | Halter |
| 36 | Rollen | 230 | Randstreifen |
| 37 | Gasabströmraumes | | |
| 38 | Schüttgutaustragungswagen | A | Doppelpfeil |
| 40A,B | Schüttgut-Vorratsbunker | A' | Doppelpfeil |
| 41A,B | Zwischenboden | A" | Doppelpfeil |
| 42A | Mündungsöffnungen | B | Doppelpfeil |
| 42 | Chargierrohre | C | Doppelpfeil |
| 42A | obere Mündungsöffnungen | T | Fahrrichtung |

## Patentansprüche

1. Fluidbehandlungsanlage, bestehend aus mehreren nebeneinander angeordneten, parallel betriebenen Schüttgutbetten (9), bei denen das zu behandelnde Fluid ein Schüttgutbett im Wesentlichen von unten nach oben durchströmt und das Schüttgut das Schüttgutbett im Gegenstrom zum Fluid im Wesentlichen von oben nach unten durchwandert, indem am unteren Ende des Schüttgutbettes Schüttgutteilmengen abgezogen und am oberen Ende des Schüttgutbettes Schüttgutteilmengen dem Schüttgut aufgegeben werden, und bei der die Schüttgutbetten durch einen gemeinsamen horizontalen Chargierkanal (11) miteinander verbunden sind und zumindest ein, mit wahlweise von einem Schüttgut-Absperrorgan (23) verschließbaren Schüttgutauslässen versehener Chargierwagen (19) durch den Chargierkanal zwischen einer Chargierposition (28) und mehreren Schüttgutteilaufgabepositionen überhalb der Schüttgutbetten verfahrbar ist,
**dadurch gekennzeichnet, dass**
unterhalb der Schüttgutauslässe und des Schüttgut-Absperrorgans (23) des Chargierwagens längenveränderbare Schüttgutdurchleitrohre (50) vorgesehen sind, deren Schüttgutauslassmündungen (51) auf Schüttgutkegeln (9K) eines darunter liegenden Schüttgutbettes (9) enden.

2. Fluidbehandlungsanlage nach Anspruch 1, **dadurch gekennzeichnet, dass** die Schüttgutdurchleitrohre (50) durch ein sie miteinander verbindendes und von ihnen durchbrochenes erstes Tragelement (34A), wie eine Platte, insbesondere im Bereich ihrer Eintrittsöffnungen (50B), verbunden sind.

3. Fluidbehandlungsanlage nach Anspruch 1 oder 2, **dadurch gekennzeichnet, dass** kurze Rohrabschnitte (20B) mit seitlichem Spiel über die Auslassmündungen (20A) von Auslasstrichtern (20) des Chargierwagens (19) geschoben sind und lose auf einem plattenförmigen Schüttgut-Absperrorgan (23) ruhen, so dass sie dessen Durchlochungen (23A) umgeben.

4. Fluidbehandlungsanlage nach einem der Ansprüche 1 bis 3, **dadurch gekennzeichnet, dass** ein durchlochtes Schüttgut-Absperrorgan (23) von einem mit Rollen (36) versehenen Tragmittel (35) gehalten wird, so dass es zum Öffnen und Verschließen der Schüttgutauslassrohre horizontal verschoben werden kann.

5. Fluidbehandlungsanlage nach einem der Ansprüche 1 bis 4, **dadurch gekennzeichnet, dass** die Schüttgutdurchleitrohre (50) als Teleskopanordnungen, bestehend aus einem oberen und einem unteren Schüttgutdurchleitrohr (50', 50"), ausgestaltet sind, so dass die Schüttgutauslassmündungen (51) der Schüttdurchleitrohre (50) unter Veränderung der Höhe des Schüttgutbettes (9) nach oben oder unten verlagerbar sind.

6. Fluidbehandlungsanlage nach Anspruch 5, **dadurch gekennzeichnet, dass** die unteren Schüttgutdurchleitrohre (50") an mindestens einer Stelle durch ein gemeinsames rasterartiges zweitesTragelement (34B) miteinander verbunden sind.

7. Fluidbehandlungsanlage nach einem der Ansprüche 1 bis 6, **dadurch gekennzeichnet, dass** die Schüttgutdurchleitrohre (50) Bestandteil des Chargierwagens oder Bestandteil jedes Schüttgutbettes (9) sind.

8. Fluidbehandlungsanlage, bei der mehrere Schüttgutbetten übereinander angeordnet sind und Chargierrohre (42) zur Beschickung unterer Schüttgutbetten, das oder die darüberliegenden Schüttgutbetten durchziehen, nach einem der Ansprüche 1 bis 7, **dadurch gekennzeichnet, dass** der Chargierwagen (19) oberhalb des obersten Schüttgutbettes (9D) vorgesehen ist.

9. Fluidbehandlungsanlage nach Anspruch 8, **dadurch gekennzeichnet, dass** der Chargierwagen Schüttgut-Bunkerbereiche (40A, 40B) mit mindestens je einer Auslassmündung (20A') für das oberste Schüttgutbett (9D) und solche mit mindestens einer Auslassmündung (20A") für das/die untere/n Bett/en (9E) aufweist.

10. Fluidbehandlungsanlage nach einem der Ansprüche 1 bis 9, **dadurch gekennzeichnet, dass** unterhalb des Chargierwagens (19) ein den Schüttgutdurchlass gestattender Zwischenboden (41A) vorgesehen ist, der den Chargierkanal (11) von dem Gasabströmraum (37) des darunterliegenden Schüttgutbettes abtrennt.

11. Fluidbehandlungsanlage nach Anspruch 10, **dadurch gekennzeichnet, dass** der Zwischenboden (41A) einen von dem Chargierwagen beschickten Zwischenbunker (43A) definiert.

12. Fluidbehandlungsanlage nach einem der Ansprüche 1 bis 11, **dadurch gekennzeichnet, dass** ein linien- oder flächenartiges Planierelement (44) in horizontal bewegbarer Weise im Bereich einer Soll-Höhe einer Schüttgutschicht angeordnet ist.

13. Fluidbehandlungsanlage nach einem der Ansprüche 1 bis 16, die aus zwei oder mehreren parallel zueinander mit seitlichern Abstand voneinander angeordneten Reihen (3A, 3B) von Wanderbettreaktormodulen (3) besteht, wobei jedes Wanderbettreaktormodul (3) mindestens ein Schüttgutbett (9) umfasst, **dadurch gekennzeichnet, dass** die Wanderbettreaktormodule (3) durch einen oberhalb der Schüttgutbetten jeder Reihe durchgehend verlaufenen Chargierkanal (11) miteinander verbunden sind.

14. Fluidbehandlungsanlage nach einem der Ansprüche 1 bis 13,
**dadurch gekennzeichnet,**
**dass** eine Schüttgutaustragseinrichtung (15) mindestens ein Stauflächen (110) aufweisendes, rinnenförmiges Stauelement (100) aufweist,
das unterhalb von in einer Reihe nebeneinander angeordneten Mündungsöffnungen der Schüttgutabzugsrohre (13) derart angeordnet ist, dass das Stauelement das aus den Schüttgutabzugsrohren (13) austretende Schüttgut aufstaut,
das zwischen den im Abstand der Rohrmündungsöffnungen vorgesehenen Stauflächen (110) Öffnungen (120) zum Durchtreten aufgestauten Schüttgutes aus dem Stauelement (100) aufweist, und
das mindestens einen, der Rinnenform angepassten verfahrbaren Schüttgutschieber (230) aufweist, und
**dass** für einen Schüttgutteilmengenaustrag ein den Schüttgutschieber (230), insbesondere über den Rinnenboden, deren Längserstreckungsrichtung nach verschiebender Antrieb derart vorgesehen ist, dass der Schüttgutschieber (230) aufgestautes Schüttgut durch mindestens eine der Öffnungen (120) des Stauelementes (100) abwirft.

15. Fluidbehandlungsanlage nach Anspruch 14, **dadurch gekennzeichnet, dass** mehrere Schüttgutschieber (230) einer Rinne (100) in einem Schüttgutschieberwagen (200) zusammengefasst sind.

## Claims

1. A fluid treatment system, comprising a plurality of fluidised beds (9) which are disposed beside one another and operated in parallel, wherein the fluid to be treated flows through a fluidised bed essentially from the bottom to the top and the bulk material migrates essentially through the fluidised bed from the top to the bottom in a counter-flow to the fluid, partial quantities of bulk material being discharged at the lower end of the fluidised bed and partial quantities of bulk material being fed to the bulk material at the upper end of the fluidised bed, and wherein the fluidised beds are connected to one another by a common horizontal charging channel (11) and at least one charging carriage (19), provided with bulk material outlets optionally closable by a bulk material shut-off element (23), can be moved through the charging channel between a charging position (28) and a plurality of bulk material feeding positions above the fluidised beds,
**characterised in that**
there are provided beneath the bulk material outlets and the bulk material shut-off element (23) of the charging carriage length-adjustable transfer pipes (50), the bulk material outlet mouths (51) whereof terminate on bulk material cones (9K) of a fluidised bed (9) lying thereunder.

2. The fluid treatment system according to claim 1, **characterised in that** the bulk material transfer pipes (50) are connected, especially in the region of their inlet openings (50B), by a first support element (34A), such as a plate, which connects them to one another and is perforated by them.

3. The fluid treatment system according to claim 1 or 2, **characterised in that** short pipe sections (20B) are pushed, with a lateral clearance, over the outlet mouths (20A) of outlet funnels (20) of the charging carriage (19) and rest loosely on a plate-shaped bulk material shut-off element (23), so that they surround its perforations (23A).

4. The fluid treatment system according to any one of claims 1 to 3, **characterised in that** a perforated bulk material shut-off element (23) is held by a support means (35) provided with rollers (36), so that it can be displaced horizontally in order to open and close the bulk material outlet pipes.

5. The fluid treatment system according to any one of claims 1 to 4, **characterised in that** the bulk material transfer pipes (50) are constituted as telescopic arrangements, comprising an upper and lower bulk material transfer pipe (50', 50"), so that the bulk material outlet mouths (51) of the bulk material transfer pipes (50) can be displaced up or down with a change in the height of the fluidised bed (9).

6. The fluid treatment system according to claim 5, **characterised in that** the lower bulk material transfer pipes (50") are connected to one another at at least one point by a common, grid-like second support element (34B).

7. The fluid treatment system according to any one of claims 1 to 6, **characterised in that** the bulk material transfer pipes (50) are a component part of the charging carriage or a component part of each fluidised bed (9).

8. The fluid treatment system, wherein a plurality of fluidised beds are disposed one above the other and charging pipes (42) for feeding lower fluidised beds run through the fluidised bed or beds lying above, according to any one of claims 1 to 7, **characterised in that** the charging carriage (19) is provided above the uppermost fluidised bed (9D).

9. The fluid treatment system according to claim 8, **characterised in that** the charging carriage comprises bulk material bunker regions (40A, 40B) with in each case at least one outlet mouth (20A') for the uppermost fluidised bed (9D) and such bunker regions with at least one outlet mouth (20A") for the lower bed(s) (9E).

10. The fluid treatment system according to any one of claims 1 to 9, **characterised in that** there is provided beneath the charging carriage (19) an intermediate floor (41A), which permits the bulk material passage and which separates in the charging channel (11) from the gas outflow space (37) of the fluidised bed lying thereunder.

11. The fluid treatment system according to claim 10, **characterised in that** the intermediate floor (41A) defines an intermediate bunker (43A) fed from the charging carriage.

12. The fluid treatment system according to any one of claims 1 to 11, **characterised in that** a linear or planar levelling element (44) is disposed in a horizontally movable manner in the region of a desired height of a bulk material layer.

13. The fluid treatment system according to any one of claims 1 to 16, which comprises two or more parallel, laterally spaced rows (3A, 3B) of migrating bed reactor modules (3), wherein each migrating bed reactor module (3) comprises at least one fluidised bed (9), **characterised in that** the migrating bed reactor modules (3) are connected to one another by a charging channel (11) running continuously above the fluidised beds of each row.

14. The fluid treatment system according to any one of claims 1 to 13,
**characterised in that**
a bulk material discharge device (15) comprises at least one trough-shaped baffle element (100) comprising baffle areas (110),
said baffle element is disposed beneath mouth openings of the bulk material discharge pipes (13) disposed beside one another in a row, in such a way that the baffle element accumulates the bulk material being discharged from the bulk material discharge pipes (13),
said baffle element comprises, between the baffle areas (110) provided at a distance from the pipe mouth openings, openings (120) for the passage of accumulated bulk material from the baffle element (100), and
said baffle element comprises at least one movable bulk material slide gate (230) adapted to the trough shape, and
that, for a partial discharge of the bulk material, a drive displacing the bulk material slide gate (230), in particular over the trough floor, in the direction of its longitudinal extension is provided in such a way that the bulk material slide gate (230) ejects accumulated bulk material through at least one of the openings (120) of the baffle element (100).

15. The fluid treatment system according to claim 14, **characterised in that** a plurality of bulk material slide gates (230) of a trough (100) are grouped together to form a bulk material slide-gate carriage (200).

## Revendications

1. Dispositif de traitement de fluide composé de plusieurs lits de matières en vrac (9) exploités en parallèle disposés les uns à côté des autres pour lequel le fluide à traiter s'écoule pour l'essentiel du bas vers le haut à travers un lit de matières en vrac et les matières en vrac traversent le lit de matières en vrac dans un écoulement inverse au fluide pour l'essentiel du haut vers le bas, des quantités partielles de matières en vrac étant entraînées à l'extrémité inférieure du lit de matières en vrac et des quantités partielles de matières en vrac étant distribuées aux matières en vrac à l'extrémité supérieure du lit de matières en vrac et pour lequel les lits de matières en vrac sont reliés entre eux par un conduit de chargement (11) commun horizontal et au moins un chariot de chargement (19) muni de sorties de matières en vrac fermables facultativement par un organe d'obturation de matières en vrac (23) peut être déplacé à travers le conduit de chargement entre une position de chargement (28) et plusieurs positions de distribution partielle de matières en vrac au-dessus des lits de matières en vrac **caractérisé en ce qu**'en-dessous des sorties de matières en vrac et de l'organe d'obturation des matières en vrac (23) du chariot de chargement sont prévus des tuyaux de passage de matières en vrac (50) dont les orifices de sortie de matières en vrac (51) se terminent en pièces coniques de matières en vrac (9K) d'un lit de matières en vrac (9) situé en-dessous..

2. Dispositif de traitement de fluide selon la revendication 1 **caractérisé en ce que** les tuyaux de passage de matières en vrac (50) sont reliés par un premier élément porteur (34A) les reliant entre eux et traversé par eux, comme une plaque, en particulier dans la zone de leurs ouvertures d'entrée (50B).

3. Dispositif de traitement de fluide selon la revendication 1 ou 2 **caractérisé en ce que** des sections de tuyau courtes (20B) sont poussées avec un jeu latéral sur les orifices de sortie (20A) des trémies d'évacuation (20) du chariot de chargement (19) et reposent librement sur un organe d'obturation es matières en vrac (23) de sorte qu'elles entourent les perforations (23A) de celui-ci.

4. Dispositif de traitement de fluide selon une quelconque des revendications 1 à 3 **caractérisé en ce qu'**un organe d'obturation de matières en vrac (23) perforé est maintenu par un moyen de support (35) muni de galets (36) de sorte qu'il peut être poussé horizontalement pour ouvrir et fermer les tuyaux de sortie de matières en vrac.

5. Dispositif de traitement de fluide selon une quelconque des revendications 1 à 4 **caractérisé en ce que** les tuyaux de passage des matières en vrac (50) sont conçus comme des montages télescopiques composé d'un tuyau de passage des matières en vrac supérieur et d'un tuyau de passage des matières en vrac inférieur (50', 50") de sorte que les orfices de sortie des matières en vrac (51) des tuyaux de passage des matières en vrac (50) sont déplaçables vers le haut ou vers le bas en modifiant la hauteur du lit de matières en vrac (9).

6. Dispositif de traitement de fluide selon la revendication 5 **caractérisé en ce que** les tuyaux de passage des matières en vrac (50") inférieurs sont reliés entre eux en au moins un point par un deuxième élément porteur (34B) commun de type à trame.

7. Dispositif de traitement de fluide selon une quelconque des revendications 1 à 6 **caractérisé en ce que** les tuyaux de passage des matières en vrac (50) font partie du chariot de chargement ou font partie de chaque lit de matières en vrac (9).

8. Dispositif de traitement de fluide pour lequel plusieurs lits de matières en vrac sont disposés l'un sur l'autre et les tuyaux de chargement (42) destinés au chargement des lits de matières en vrac inférieurs traversent le ou les lits de matières en vrac situé(s) dessus selon une quelconque des revendications 1 à 7 **caractérisé en ce que** le chariot de chargement (19) est prévu au-dessus du lit de matières en vrac (9D) le plus haut.

9. Dispositif de traitement de fluide selon la revendication 8 **caractérisé en ce que** le chariot de chargement présente des zones à caisson pour matières en vrac (40A, 40B) avec au moins à chaque fois un orifice de sortie (20A') pour le lit de matières en vrac (9D) le plus haut et des zones identiques avec au moins un orifice de sortie (20A") pour le/les lit(s) (9E) inférieur(s).

10. Dispositif de traitement de fluide selon une quelconque des revendications 1 à 9 **caractérisé en ce qu**'en-dessous le chariot de chargement (19) est prévu un fond intermédiaire (41A) permettant le passage des matières en vrac qui sépare le conduit de chargement (11) du compartiment d'écoulement des gaz (37) du lit de matières en vrac se trouvant en-dessous.

11. Dispositif de traitement de fluide selon la revendication 10 **caractérisé en ce que** le fond intermédiaire (41A) définit un caisson intermédiaire (43A) alimenté par le chariot de chargement.

12. Dispositif de traitement de fluide selon une quelconque des revendications 1 à 11 **caractérisé en ce qu'**un élément de nivellement (44) en ligne ou en nappe est disposé de manière horizontalement mobile dans la zone d'une hauteur théorique d'une couche de matières en vrac.

13. Dispositif de traitement de fluide selon une quelconque des revendications 1 à 16 qui est composé de deux ou plusieurs rangées (3A, 3B) disposées parallèles les unes aux autres avec un intervalle latéral entre elles de modules de réacteur à lit mobile (3), pour lequel chaque module de réacteur à lit mobile (3) comprend au moins un lit de matières en vrac (9) **caractérisé en ce que** les modules de réacteur à lit mobile (3) sont reliés entre eux par un conduit de chargement (11) passant traversant au-dessus des lits de matières en vrac de chaque rangée.

14. Dispositif de traitement de fluide selon une quelconque des revendications 1 à 13 **caractérisé en ce qu**'un dispositif d'extraction des matières en vrac (15) présente au moins un élément de retenue (100) en forme de goulotte présentant des surfaces de retenue (110), qui est monté en-dessous des ouvertures d'orifice disposées dans une rangée les unes à côté des autres de sorte que l'élément de retenue retient les matières en vrac sortant des tuyaux d'extraction de matières en vrac (13), qui présente entre les surfaces de retenue (110) prévues à distance des ouvertures d'orifice de tuyaux, des ouvertures (120) pour faire passer les matières en vrac hors de l'élément de retenue (100) et qui présente au moins une coulisse pour matières en vrac (230) déplaçable adaptée à la forme de la goulotte et **en ce que** pour une extraction de quantités partielles de matières en vrac, il est prévu une commande déplaçant la coulisse pour matières en vrac (230), en particulier sur le fond de la goulotte, selon son sens d'extension longitudinal.

15. Dispositif de traitement de fluide selon la revendication 14 **caractérisé en ce que** plusieurs coulisses pour matières en vrac (230) d'une goulotte (100) sont réunies dans un chariot à coulisses pour matières en vrac (200).
